# EUROPEAN PATENT SPECIFICATION

(11) **EP 1 798 081 B1**
(45) Date of publication and mention of the grant of the patent: **23.09.2009**
(21) Application number: 06026082.5
(22) Date of filing: 15.12.2006
(51) Int. Cl.: B60G 17/015, B60G 21/00

(54) **Vehicle with tilting suspension system**
Seitlich neigbares Fahrzeug
Véhicule comprenant un système de suspension permettant l'inclinaison du véhicule

(30) Priority: 16.12.2005 EP 05027656
(43) Date of publication of application: 20.06.2007
(73) Proprietor: Fondazione Torino Wireless, 10129 Torino (IT); POLITECNICO DI TORINO, 10129 Torino (IT)
(72) Inventor: Tonoli, Andrea, 10051 Avigliana (Torino) (IT); Festini, Andrea, 10093 Collegno (Torino) (IT); Cavalli, Fabio, 15100 Allessandria (IT); Carabelli, Stefano, 10054 Cesana Torinese (Torino) (IT); Fariello, Massimo, 10100 Torino (IT)
(74) Representative: Grünecker, Kinkeldey, Stockmair & Schwanhäusser Anwaltssozietät

(56) References cited:
- FR-A- 2 745 757
- US-A- 2 260 102
- US-A1- 2004 051 262

## Description

### FIELD OF THE PRESENT INVENTION

The present invention relates to the field of automotive applications. In particular, the present invention relates to a suspension tilting module for vehicles and a vehicle equipped with such a suspension tilting module. In more detail, the present invention relates to a suspension tilting module allowing at least two wheels or other supporting elements of a vehicle to be tilted together with the whole body of the vehicle. Still in more detail, the present invention relates to a suspension tilting module allowing both steering and tilting of said two wheels or other supporting elements. Furthermore, the present invention relates to a suspension tilting module wherein driving motors can be received in the hubs of two wheels disposed on a common axle, so as to realize the active control of the torque on the wheels of the same axle, for example by increasing the torque on one wheel and decreasing the torque on the other wheel.

Moreover, the present invention relates to the field of snow vehicles, such as snowmobiles.

### DESCRIPTION OF THE PRIOR ART

Over the past few years, an interest has grown towards a vehicle with innovative configurations due to the increasing number of vehicles and the related problems of traffic congestion and pollution. Such vehicles are usually of small dimensions of weight and size to minimize the parking problems and reduce the losses due to the rolling resistance and aerodynamic drag. In particular, the size of these vehicles is normally designed for one or two people, thus allowing personal mobility; moreover, the small size and weight of these vehicles allows for the reduction of the engine power and accordingly, the emissions without compromising the performance. In particular, over the past years, many efforts have been devoted by the car manufacturers for the development of so-called tilting vehicles, namely of vehicles wherein all or part of the vehicle is inclined inward during cornering so that the resultant of the gravity and the centrifugal forces is kept oriented along the vertical body axis of the vehicle. Accordingly, rollover can be avoided even if the track of the tilting vehicle is narrow with respect to that of conventional vehicles.

Several tilting vehicle have been proposed in the past with three or more wheels. In some three wheeled vehicles, the tilting is given just to the body and the central wheel while the axis with dual wheels does not tilt. On the contrary, in other cases, the solution is preferred according to which all wheels tilt with the body, since this solution allows to obtain improved performances concerning the dynamic of the vehicle.

However, in spite of all the advantages offered by tilting vehicles, the further development of these vehicles has revealed that several problems have still to be solved and/or overcome. For instance, it has been revealed to be very difficult to obtain good tilting performances in the case of driving wheels, i.e. in the case of wheels exploiting the traction function; in fact, in the case of driving wheels the tilting angle obtained with the known tilting solutions is rather limited (in the range of 35°) whilst only tilting angles in the range of 45° rarely allow to overcome the rollover problem. For this reason, up to now, tilting solutions have been proposed essentially for three cycles, wherein the mechanical transmission is connected to a central wheel (as in the case of a motor bike) while the other two wheels are tilting but they do not exploit the driving function. To overcome this limitation, solutions have been proposed according to which a differential gear is installed on a frame that can rotate with respect to the body of the vehicle; this allows tipping the misalignment of the ball joints to acceptable limits even with large tilting angles of the vehicle body. However, the resulting configuration is very complex and may be affected by low efficiency and reliability, high vibration levels and heavy weight.

Further problems affecting the known tilting solutions relates to the fact that these solutions have revealed to be unsatisfactory when applied to steering wheels; in particular, in the known solutions, either the steering angle or the tilting angle is very limited whilst no solutions are known allowing good performance concerning both the steering and the tilting function. In particular, this is due to the fact that standard ball joints of the kind used for cars suspensions cannot be used when high titling angles have to be obtained. In fact, spherical joints for automotive applicants are designed to allow free rotation about the steering axis but the tilting angles allowed by spherical joints are limited to less than 40°. However, these titling angles are not adequate for high tilting suspension systems when rotation angles in the range of 100° are needed.

Examples of tilting modules of the kind described above can be found in documents US 2152938 and FR 2745757.

Also in the field of snow vehicles, as snowmobile a number of inventions have been presented in the last years in order to improve the stability, as well as the drive feeling and the comfort of these vehicles.

The patent US 6942050 B1 relates to a front suspension system for snowmobiles.
It discloses a suspension system with a double wishbone configuration. Investigations have been made on the position of the damper, arms and shock absorber to improve the driving feeling of the snowmobile. The proposed module is not tilting: the shock absorbers are rigidly linked to the frame of the vehicle and these linking points remain fixed when the wishbones move.

The patent US 6467787 B1 discloses a mobile steering mechanism to improve the drive feeling during cornering. The steer mechanism allows the driver to more easily move his body sideways and then more easily control the steering from this position. This mechanism improves the drive feeling during cornering, but the driver must move his body sideways and this effort can be considerable. The vehicle is not tilting.

The patent application WO 2006/000841 A1 discloses a suspension tilting module, which is characterized by a geometry with longitudinal arms. With respect to a double wishbone configuration this solution is characterized by an increased complexity that gives way to some weight, cost, and reliability issues . Additionally, the longitudinal arms couple the vertical displacements to the longitudinal forces acting on the skis such that a variation of the longitudinal forces may produce a vertical displacement of the vehicle body. In fact, the tilting functionality is obtained by a configuration that includes many elements such as cardan joints and pendulum arms. Moreover the proposed solution allows to change the distance between the skis. If used with narrow skis, the vehicle can be difficult to drive due to the possibility of lateral instability, especially at low speed or when driving on hard or icy tracks. Another problem that can be introduced by this solution consists in the vertical displacements of the snowmobile frame induced by the friction and all longitudinal forces on the skis. Due to the suspension geometry, the longitudinal forces are equilibrated by forces along the suspension rods. These forces are not horizontal and their vertical component may induce a vertical motion of the frame of the snowmobile. This is an additional cause of instability of the snowmobile.

Accordingly, in view of the problems and/or drawbacks identified above, it is an object of the present invention to provide a suspension tilting module allowing to overcome the drawbacks affecting the prior art titling solutions. Moreover, it is an object of the present invention to provide a suspension tilting module for a wheel vehicle adapted to be implemented in the case of driving wheels namely in the case of wheels exploiting the driving and/or traction function but still allowing high tilting angles in particular, tilting angles of more than 45° on each side of the vehicle. A further object of the present invention is that of providing a suspension tilting module allowing to be implemented in the case of steering wheels, namely in the case of wheels exploiting both the driving and tilting function but still allowing high steering and tilting angles. Another object of the present invention is that of providing a suspension tilting module of reduced complexities, dimensions and weight. A further object of the present invention is that of providing a suspension tilting module adapted to be implemented not only in the case of three-wheeled vehicles, but in any kind of vehicle comprising at least two wheels disposed on a common axle. Still a further object of the present invention is that of providing a suspension tilting module allowing driving means to be installed in the hubs of the wheels so as to realize an all-wheel drive configuration. Still a further object of the present invention is that of providing a suspension tilting module in which driving means exploiting the driving and traction function may be installed on each tilting wheel thus allowing to control the torque generated by each driving means so as to obtain an improved traction control on each wheel.

### SUMMARY OF THE PRESENT INVENTION

To this end, according to the present invention, this is obtained by providing a suspension tilting module adapted to support two supporting elements so that tilting of said suspension system results in said two supporting elements being also tilted. Moreover, according to the present invention, this is obtained by providing a suspension tilting module comprising innovative steering arms or uprights adapted to support two supporting elements of a vehicle and adapted to allow both steering and tilting said two supporting elements.

In particular, according to the present invention, there is provided a suspension tilting module as claimed in claim 1, namely a suspension tilting module for a vehicle comprising at least two supporting elements disposed between the vehicle and the floor, said module comprising a suspension system adapted to support said at least two supporting elements allowing tilting of said at least two supporting elements, said module comprising an actuating device equipped with tilting means pivotally connected to said suspension system, so that activation of said actuating device results in said tilting means being tilted together with said suspension system and said at least two supporting elements, said actuating device further comprising a rotatable shaft firmly fixed to said tilting means so that rotation of said shaft results in said tilting means being tilted, and at least one electric motor adapted to rotate said rotatable shaft, said suspension system comprising a rigid frame adapted to be firmly fixed to the chassis of said vehicle, said rigid frame being firmly fixed to said actuating device and pivotally connected to suspension arms of said suspension system so that activation of said actuating device results in said rigid frame being tilted together with said at least supporting elements; said suspension arms comprising a first upper arm and a first lower arm adapted to pivotally support, in combination, a first supporting element of said at least two supporting elements, as well as a second upper arm and a second lower arm adapted to pivotally support, in combination, a second supporting element of said at least two supporting elements so as to allow tilting of said first and second supporting elements; wherein said tilting means are pivotally connected to said first and second upper arms through corresponding first and second shock absorbers, respectively.

According to the present invention, there is also provided a suspension tilting module as claimed in claim 3, namely a suspension tilting module comprising a first steering arm or upright adapted to support a first supporting element and a second upright adapted to support a second supporting element, with said first and second uprights allowing steering of said first and second supporting elements on corresponding steering axis substantially vertical and being adapted to be tilted together with said first and second supporting elements, respectively.

There is also provided a driving titling suspension system as claimed in claim 12, namely a driving tilting suspension system for a wheeled vehicle comprising at least two wheels disposed on a common axle and comprising a suspension tilting module according to the present invention.

There is also provided a driving tilting suspension system as claimed in claim 13, namely a driving titling suspension system comprising at least two electric motors mechanically coupled to one of said at least two wheels so as to drive said one wheel.

There is further provided a driving tilting suspension system as claimed in claim 17, namely a driving tilting suspension system wherein said motors are received inside the hubs of said wheels.

Furthermore, there is provided a wheeled vehicle as claimed in claim 26, namely a wheeled vehicle equipped with a driving tilting suspension system according to the present invention.

Furthermore, there is provided a driving tilting suspension system for a snowmobile as claimed in claim 31, namely a snowmobile wherein the skis are rigidly connected to each other.

Furthermore, there is provided a snowmobile as claimed in claim 33, namely a snowmobile equipped with a suspension tilting according to the present invention.

Further embodiments and/or details of the present invention are defined in the dependent claims.

### BRIEF DESCRIPTION OF THE DRAWINGS

In the following, a description will be given with reference to the drawings of particular and/or preferred embodiments of the present invention; it has, however, to be noted that the present invention is not limited to the embodiments disclosed but that the embodiments disclosed only relate to particular examples of the present invention, the scope of which is defined by the appended claims. In particular, in the drawings:
figure 1 relates to a schematic perspective view of a first embodiment of the suspension tilting module and the tilting driving suspension system according to the present invention;
figure 2a relates to a front view of the embodiment of the present invention depicted in figure 1;
figure 2b relates to a rear view of the embodiment of the invention depicted in figure 1;
figure 3 relates to an perspective view of both the solution adapted to be implemented in the module and system according to the present invention;
figure 4a relates to schematic view of the titling module and system according to the present invention when tilted at a predefined angle;
figure 4b relates to a schematic view depicting the behavior of the tilting module and system according to the present invention when one of the wheels crosses a bump;
figure 5 relates to a schematic view of a upright implemented in the tilting module and system according to the present invention;
figures 5a and 5b relate to corresponding cross sectional views along the planes A-A and B-B depicted in figure 1, respectively;
figure 6 relates to a top view of a further steering solution adapted to be implemented in the tilting module and system according to the present invention;
figure 7 relates to a schematic perspective view of a further embodiment of the tilting module and system according to the present invention;
figure 8 relates to a schematic top view of a further embodiment of the tilting module and system according to the present invention;
figure 9 relates to a schematic view of the way driving means may be implemented in the driving tilting module system according to the present invention;
figure 10 relates to the schematic view of the tilting system according to the present invention when equipped with driving means received in the hubs of the wheels; and
figure 11 relates to a schematic view of a further possible electrical layout of the titling module and system according to the present invention when equipped with driving means received in the hubs of the wheels;
figure 12 relates to a schematic view of a titling snowmobile with a tilting suspension module according to the present invention;
figure 13 relates to a schematic perspective view of the tilting module for a snow vehicle according to the present invention;
figure 14 relates to a schematic view of the tilting module for a snow vehicle when the module is not tilted and when it is tilted at a predefined angle according to the present invention;
figure 15 relates to a schematic view of the skis and their connections to the tilting module according to the present invention.

### DETAILED DESCRIPTION

While the present invention is described with reference to the embodiments as illustrated in the following detailed description as well as in the drawings, it should be understood that the following detailed description as well as the drawings are not intended to limit the present invention to the particular illustrative embodiments disclosed, but rather the described illustrative embodiments merely exemplify the various aspects of the present invention, the scope of which is defined by the appended claims.

In this detailed description first will be treated the aspect of the invention relating to a wheeled vehicle and in the second part the aspects related to a snow vehicle.

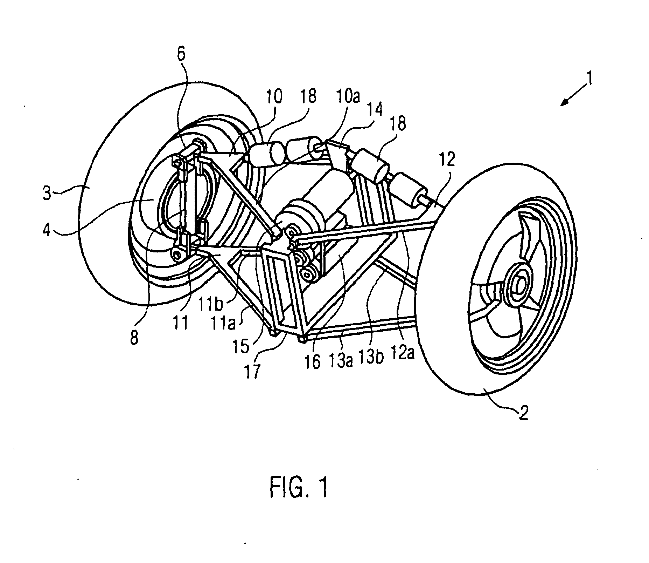

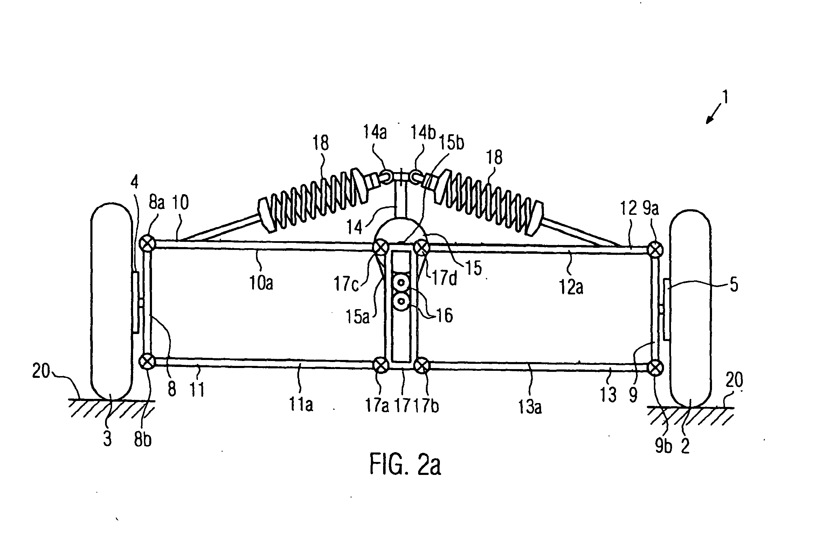

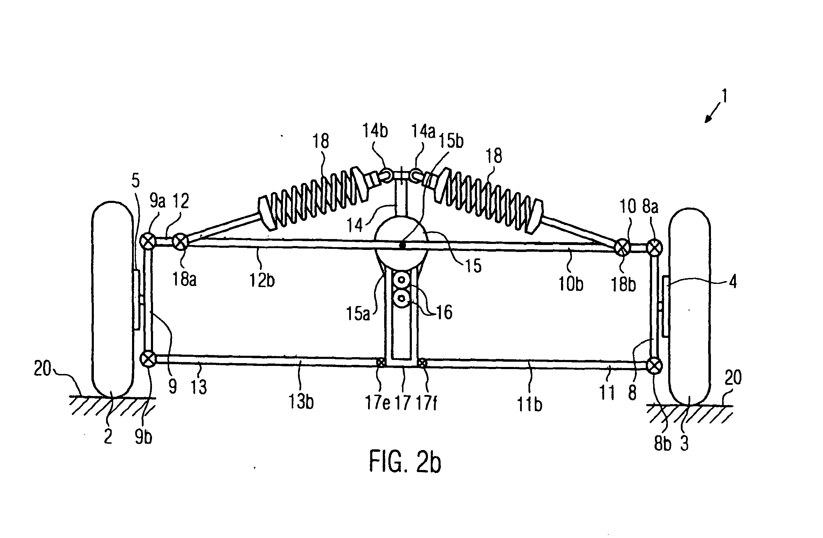

As apparent from the disclosure given above, the present invention is understood to be particularly advantageous when used for application in the automotive field; in particular, the present invention is understood to be particularly advantageous when applied to wheeled vehicles comprising at least two driving and steering wheels. For this reason, examples will be given in the following in which corresponding embodiments of the titling modular system according to the present invention are described in combination with steering and driving wheels. However, it has to be noted that the present invention is not limited to the particular case of a tilting module and system for steering and driving wheels but can be used in any other situation in which two wheels of a vehicle disposed on a common axle need to be tilted. Accordingly, it will become apparent from the following disclosure that the present invention may also be used for automotive applications in which, for instance, the driving wheels and/or the steering wheels are not tilted. In the following, with reference to figures 1, 2a and 2b, a first embodiment of the tilting module and system (identified by the reference numeral 1) according to the present invention will be described.

As apparent from figures 1, 2a and 2b, the tilting module and system depicted therein comprise a suspension structure or system defined by a rigid frame 17 and four suspension wishbone arms 10, 11, 12 and 13. In particular, said suspension structure comprises a first upper wishbone arm 12 defined by front wishbone portion 12a and rear wishbone portion 12b (see in particular figure 2b). In the same way, the suspension structure comprises a first lower arm 13 defined by a front wishbone portion 13a and a rear wishbone portion 13b. Similarly, the suspension structure comprises a second upper wishbone arm 10 defined by a front wishbone portion 10a and a rear wishbone portion 10b (see figure 2b). Moreover, the suspension structure comprises a second lower wishbone arm 11 defined by the front wishbone portion 11a and a rear wishbone portion 11 b. The front wishbone portions 12a and 13a of the first upper arm 12 and the first lower arm 13 are pivotally connected to the rigid frame 17 through pivotable connections 17d and 17b, respectively. In the same way, the front wishbone portions 10a and 11 a of the second upper arm 10 and the second lower arm 11, respectively, are pivotally connected to the rigid frame 17 through pivotable connections 17c and 17a, respectively. The rear wishbone portions 13b and 11 b of the first lower arm 13 and the second lower arm 11, respectively, are pivotally connected to the rigid frame 17 through pivotable connections 17e and 17f, respectively. The rigid frame 17 firmly supports an actuating device comprising two electric motors 16 and a reduction gear 15 adapted to be activated by said two electric motors 16 through a transmission belt 15a. Moreover, the reduction gear comprises a rotatable shaft 15b to which there is firmly fixed a tilting crank 14; as it will become more apparent with the following disclosure, rotating the rotatable shaft 15b results in the tilting crank being tilted. The rear wishbone portions 12b and 10b of the first upper wishbone arm 12 and the second upper wishbone arm 10 are pivotally connected to the rotatable shaft 15b. The suspension structure further comprises a first upright 9 adapted to rotatably support a first wheel 2 as well as a second upright 8 adapted to rotatably support a second wheel 3. The first upright 9 is supported by the first upper arm 12 and the first lower arm 13. In particular, the first upright 9 is pivotally connected to the first upper and lower arms 12 and 13 to pivotable connections 9a and 9b, respectively. In the same way, the second upright 8 is supported by the second upper arm 10 and the second lower arm 11; in particular, the second upright 8 is pivotally connected to the second upper arm 10 an the second lower arm 11 through pivotable connections 8a and 8b, respectively. As will become more apparent with the following disclosure, the pivotable.connections 9a, 9b, 8a and 8b allow both steering and tilting of the two wheels 2 and 3. Two motors 4 and 5 are received in the hubs of the wheels 3 and 2, respectively; moreover, in figure 1, reference numeral 6 identifies a brake disk of the wheel 3. A corresponding brake disk, even if not depicted in the drawings, is provided or the wheel 2. The suspension structure comprises moreover two shock absorbers 18 pivotally connected to both the tilting actuator or crank 14 and to the upper wishbone arms 10 and 12. In particular, a first shock absorber 18 is pivotally connected to the actuating crank 14 through a pivotable connection 14a and to the second upper arm 10 through a pivotable connection 18b. In the same way, a second shock absorber 18 is pivotally connected to the pivoting actuator or crank 14 through a pivotable connection 14b and to the first upper arm 12 through a further pivotable connection 18a. In the embodiment depicted in figures 2a and 2b (see in particular figure 1 and figure 2b) the two shock absorbers 18 are connected to the rear wishbone portions 10b and 12b, respectively; in particular, this is due to the fact that the pivoting crank 14 is provided, in this embodiment, at the rear end portion of the gearbox 15. However, it would also be possible to totally connect the two shock absorbers 18 to the front wishbone portions 12a and 10a, respectively, for instance by providing the pivoting crank 14 on the front end portion of the gearbox 15. Finally, in figures 2a and 2b, reference numeral 20 identifies a road or ground on which a vehicle implementing the tilting module and system depicted therein is assumed to travel.

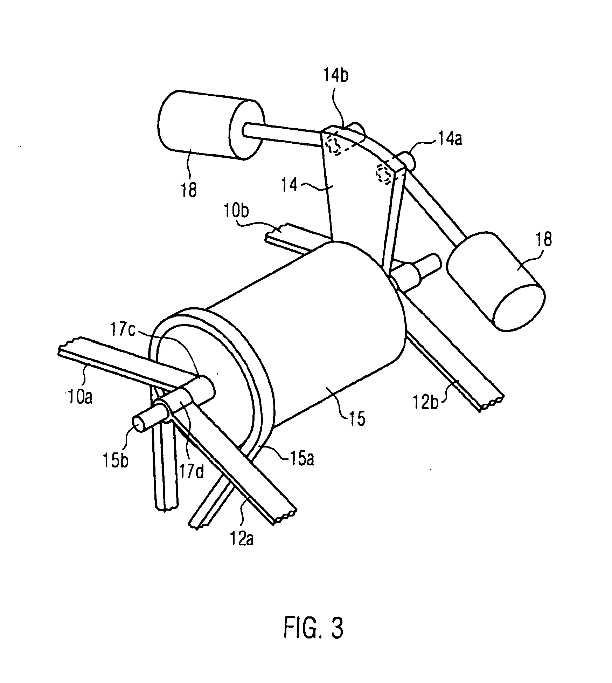

Before proceeding with the description of the way tilting is performed in the case of the tilting module and system depicted in figures 1, 2a and 2b, an alternative solution will be described in the following with reference to figure 3 relating to the way the wishbone arms of the suspension structure may be disposed; in particular, in figure 3, those parts already described with reference to figures 1, 2a and 2b are identified by the same reference numerals whilst some of the parts depicted in figures 1, 2a and 2b are omitted in figure 3 for reasons of clarity.

The most important aspects of the solution depicted in figure 3 relate to the fact that according to this solution, the front wishbone portions 12a and 10a of the first upper arm 12 and the second upper arm 10 are pivotally connected (not depicted in figure 3) about the same axis of the rotating shaft 15b of the gearbox 15. The solution depicted in figure 3 allows to further reduce the complexity of the suspension structure as well as its dimensions but the reciprocal disposition of the rear wishbone portions 12b and 10b, however, is not modified, as well as the reciprocal disposition of the pivoting crank 14 and the shock absorbers 18 which, as stated above, are pivotally connected to said pivoting crank 14 to pivotable connections 14a and 14b.

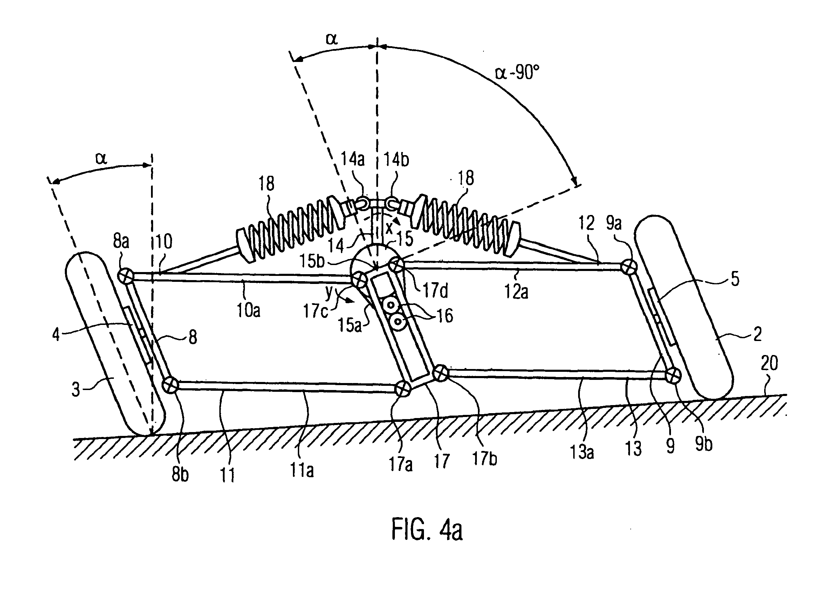

In the following, with reference to figure 4a, a description will be given of the tilting behavior of the tilting module and system of figures 1, 2a and 2b; again, in figure 4a, those component parts already described with reference to previous figures are identified by the same reference numerals.

As soon as tilting of the vehicle implementing the tilting module and system depicted in figure 4a is required (for instance, during cornering of the vehicle) electrical current is supplied to the electric motors 16; accordingly, the two electric motors 16 are activated, resulting in the gearbox 15 being also activated through the transmission belt 15a. That means that a rotational impulse is given to the rotatable shaft 15b. Assuming that said rotating impulse is such as to rotate the rotatable shaft 15b in the direction of rotation x depicted in figure 4a, a corresponding tilting impulse is also given to the tilting crank 14 so as to tilt this to the left in figure 4a. Accordingly, a corresponding displacement impulse is given to the suspension structure through the shock absorber 18. However, in view of the resistance exerted by the suspension structure, neither the tilting actuator or crank 14 is tilted to the left nor the suspension structure is displaced into the same direction. However, the resistance exerted by the suspension structure results in a reverse torque arising, with said reverse torque acting on the case of the gearbox 15, resulting in said gearbox 15 being rotated in a direction contrary to the direction x, namely in the direction y depicted in figure 4a. Since the gearbox 15 is firmly fixed to the rigid frame 17, also this rigid frame 17 is rotated of an angle α as a function of the rotating impulse originally given to the rotatable shaft 15b and the tilting crank 14. As stated above, the support arms 10, 11, 12 and 13 are either pivotally connected to the rigid frame 17 through the pivotable connection 17a, 17b, 17c, 17d, 17e and 17f or the rotatable shaft 15b (see in particular figure 2b). Moreover, the uprights 9 and 8 are pivotally connected to the suspension arms 12, 13 and 10, 11, respectively, through the further pivotable connections 9a, 9b, and 8a, 8b. Finally, the shock absorbers 18 are pivotally connected to the suspension arms 8 and 12 through corresponding pivotable connections 18b and 18a. Accordingly, the rotation of the rigid frame 17 of an angle α on the rotatable shaft 15b results in the whole suspension structure being tilted to the left in figure 4a together with the wheels 3 and 2 which, as depicted in figure 4a are also tilted of the same angle α. Obviously, the same considerations as stated above also apply in the case of a rotating impulse in the direction contrary to the direction x being given to the rotatable shaft 15b and the tilting crank 14; in this case, the suspension structure would be tilted in a corresponding contrary direction, i.e. to the right in figure 4a.

It results, therefore, from the above that the tilting module and system according to the present invention is an active tilting module and system, namely a module and system wherein the tilting function is obtained through the action of an actuating device which may comprise one or more electric motors eventually in combination with a gearbox connected to said electric motors through a transmission belt; alternatively, different actuating means may be used such as, for instance, hydraulic actuating means or the like. In the same way, equivalent transmission means may be use instead of the transmission belt 15a.

It has, moreover, to be appreciated that rotating the rigid frame 17 of an angle α as depicted in figure 4a results in the whole vehicle being tilted in the same angle α since the rigid frame 17 is firmly fixed to the chassis or body of the vehicle; accordingly, the result of the gravity and the centrifugal forces is kept oriented along the vertical body axis of the vehicle, thus allowing to avoid or at least minimize the rollover risk even if the track of the vehicle is now very curved compared to that of conventional vehicles.

For the purpose of exploiting the tilting function, the vehicle implementing the tilting module and/or system according to the present invention may be equipped with sensing means adapted to correct data relating to the dynamic behavior of the vehicles so as to activate the actuating means (the electric motor 16 and the gearbox 15 in the case of the system depicted in figure 4a) as a function of the data collected. In particular, the sensing means may be of the kind adapted to collect data relating to the lateral acceleration and/or forces of the vehicle. Accordingly, as soon as the vehicle approaches a curve or cornering and a driving action is exerted by the driver, the resulting lateral acceleration acting on the vehicle may be detected and measured and a corresponding signal may be sent to a central unit adapted to activate the actuating means, thus resulting in the vehicle being tilted so as to compensate the lateral acceleration felt by the vehicle. This solution, in particular, allows to compensate any lateral acceleration, i.e. also lateral acceleration arising in situation other than during cornering. For instance, in the case of lateral wind, also resulting lateral acceleration acting on the vehicle can be detected and the vehicle can be tilted contrary to the lateral wind and also in the case of the vehicle traveling on a straight road.

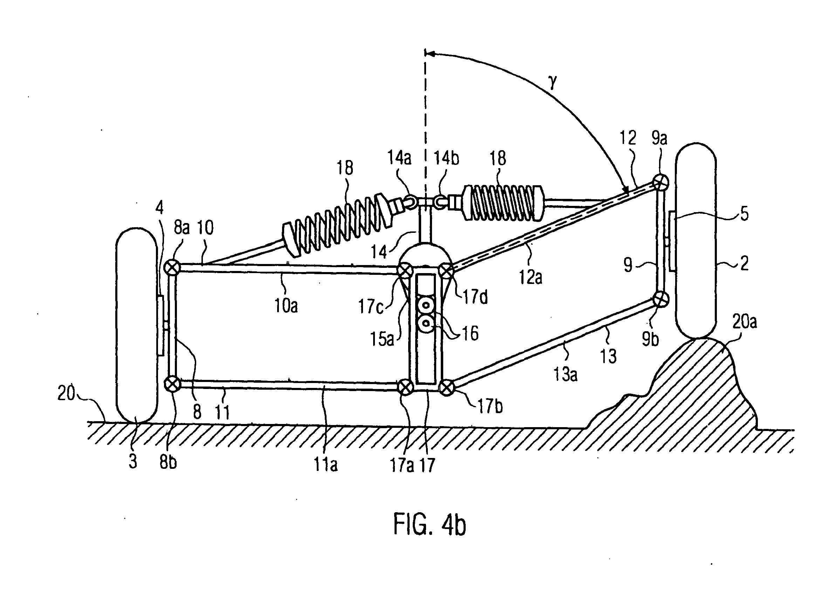

When one of the two wheels 2 and 3 crosses a bump, the tilting module and/or system according to the present invention behaves as depicted in figure 4b, where like features depicted therein are identified by like reference numerals.

In particular, in the example of figure 4b, it is assumed that the wheel 2 crosses a bump 20a of the surface r road 20; in this case, as depicted in figure 4b, the tilting module and/or system does not work because imposed vertical displacement of the wheel 2 is absorbed by the shock absorber 18. In particular, this is due to the irreversibility of the gearbox 15 connected to the tilting crank 14, which, in turn, is connected to the shock absorber 18 through the pivotable connection 14b and 18a (see figure 2b). Accordingly, the crank 14 is not tilted as a consequence of the perturbation acting on the suspension structure but only the wheel 2 is lifted as depicted in figure 4b. Accordingly, the rigid frame is not rotated and the vehicle is not tilted.

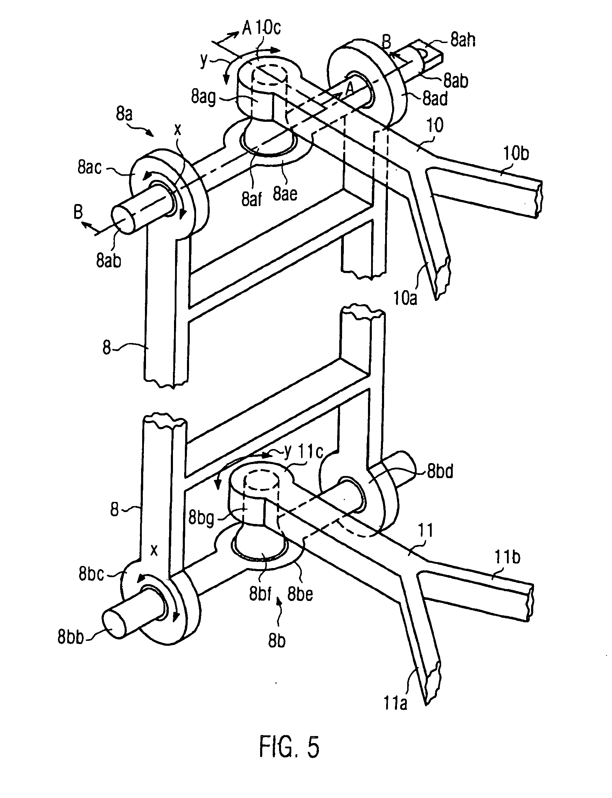

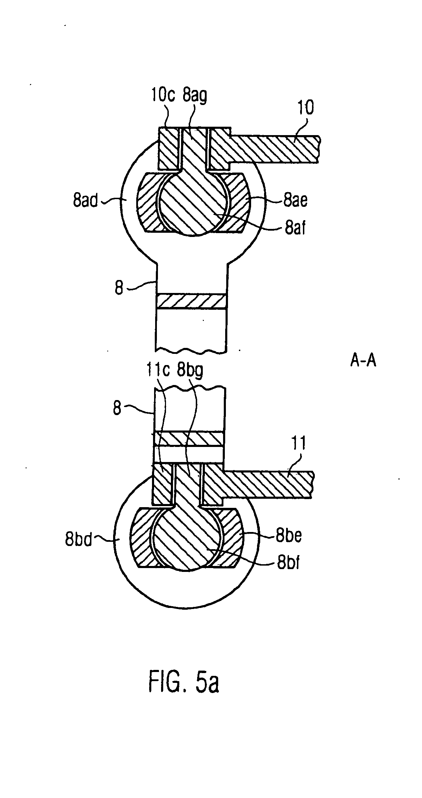

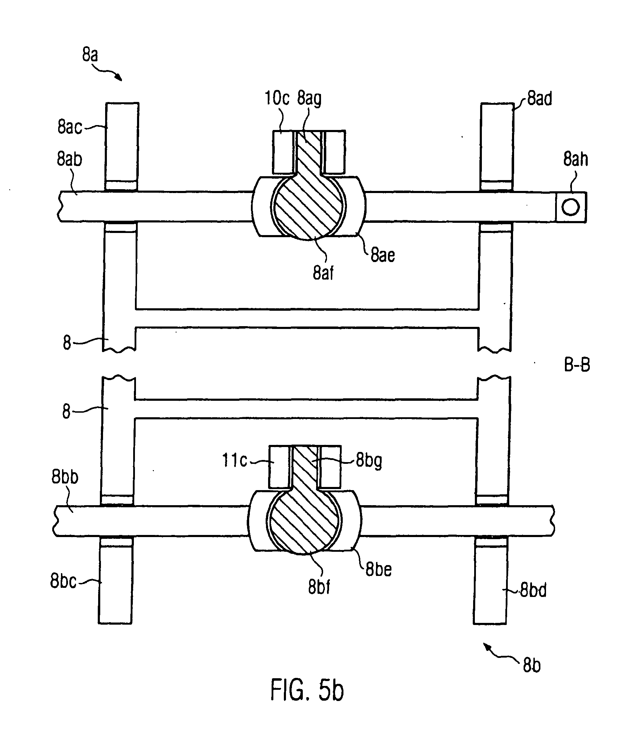

As stated above, suspension tilting module and/or systems must allow high rotational angle involved during both tilting and steering. In the following, with reference to figures 5, 5a and 5b, an example of a solution adopted in the tilting module and/or system according to the present invention and allowing high rotational titling and steering angles will be described; as usual, in figures 5, 5a and 5b, like features already described above with reference to previous figures are identified by like reference numerals.

In figures 5, 5a and 5b, there is depicted one of the two uprights of the tilting module according to the preset invention, namely the upright 8 adapted to rotatably support the wheel 3 (the left wheel in figure 2a); however, it has to be understood that the same considerations as stated above also apply to the upright 9 adapted to rotatable support the wheel 2 (the right wheel in figure 2a). Accordingly, a description of the upright 9 is omitted. As apparent from figures 5, 5a and 5b, the upright 8 comprises an upper and a lower fork, each defined by two bearing means 8ac, 8ad and 8bc, 8bd, respectively. The upper bearing means 8ac and 8ad are adapted to rotatably receive a rotatable shaft 8ab and define, in combination, a hinge axis allowing rotation of the shaft 8ab. In the same way, the lower bearing means 8bc and 8bd rotatably support a lower rotatable shaft 8bb and define a lower hinge axis that allows rotation of the lower shaft 8bb. It appears, therefore, clearly that the large tilting angle between the suspension arms 10 and 11 and the upright 8 are allowed by the rotation of the two rotatable upper and lower shafts 8ab and 8bb about the bearing means 8ac, 8ad and 8bc, 8bd, respectively. In particular, in this respect reference is made to figure 4a showing the reciprocal disposition of the suspension arms 10 and 11 with respect to the upright 8. Moreover, the upper rotatable shaft 8ab comprises a receiving portion 8ae shaped to rotatably receive a ball shape portion 8af of a ball joint. Moreover, a protruding portion 8ag extends from the ball shaped portion 8af. The protruding portion 8ag allows the ball joint and, accordingly, the upright 8 to be connected to the upper suspension arm 10. In the same way, the lower rotatable shaft 8bb comprises a receiving portion 8be adapted to rotatably receive the ball shaped portion 8bf from which a protruding portion 8bg extends allowing the upright 8 to be connected to the lower suspension arm 11. As stated above, the ball shaped portions 8af and 8bf are rotatably received inside the receiving portions 8ae and 8be, respectively. Accordingly, this allows the rotation of the upright 8 in the direction identified by the two arrows in figure 5, i.e. on a rotation axis substantially vertical and allows, therefore, the rotations involved during steering. To this end, the rotatable shaft 8ab is provided with an end portion 8ah adapted to be connected with a steering rod (not depicted in figures 5, 5a and 5b). During tilting of the suspension module and/or system, the two ball joints are subjected to minor rotations, for instance to the minor rotations arising when the upright 8 is not disposed perfectly vertical. The ball joints allow the rotations involved during steering while the rotatable shafts 8ab and 8bb are subject to minor rotations.

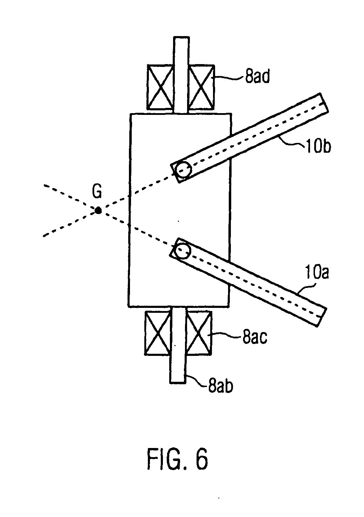

In the solution described above with reference to figures 5, 5a and 5b, the steering axis is defined by the two ball joints upright 8. However, the location of the steering axis is an important design feature when high performance, such as high drive feeling and stability have to be obtained. In fact, any factor limiting the allowable location of the steering axis could severely influence the performances of the vehicle. Accordingly, and still according to the present invention, a further solution has been proposed relating to the upright used for the suspension structures; this further solution will be described in the following with reference to figure 6, wherein like features already described with reference to previous figures are identified by like reference numerals. Again, whilst in the following a description will be given relating to one upright, in particular of the upright 8 adapted to rotatably to support the wheel 3 (left wheel in figure 2a), it has to be appreciated that the same considerations as stated below also apply to the second upright, namely the upright 9 adapted to rotatably support the wheel 2 (right wheel in figure 2a). As apparent form figure 6, the wishbone portions 10a and 10b of the upper wishbone arm are not connected to each other but are both connected to the rotatable shaft 8ab which is in turn rotatably received inside the bearing means 8ac and 8ad. This reciprocal disposition of the wishbone portions 10a and 10b allows to solve the problem relating to the effective position of the bearing axis; in particular, in this way, a virtual steering axis (perpendicular to the plane of figure 6) is created passing through the virtual point G. This solution is more complicated that described above with reference to figures 5, 5a and 5b since the suspension wishbone arm cannot be realized as a single element but two anchor points are needed on the rotatable shaft 8ab to connect the wishbone portions 10b and 10a. These anchor points may be ball joints allowing small rotations and displacements during tilting. However, the solution depicted in figure 6 may be preferred in all those situations in which the steering axis needs to be placed in part of the wheel hub that would not be allowed in the case of the solution depicted in figures 5, 5a and 5b.

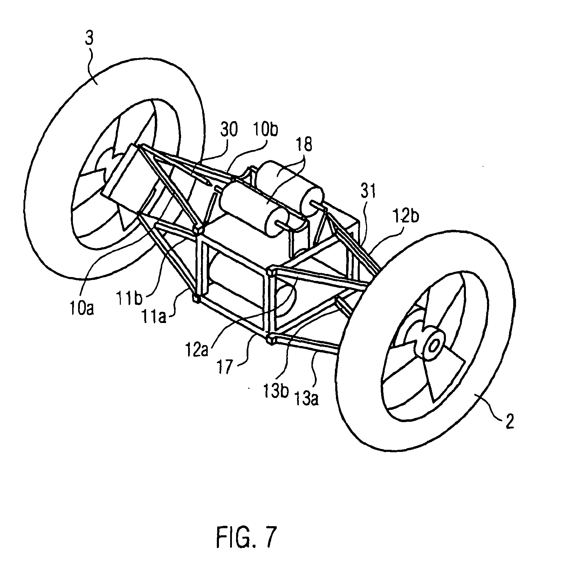

In the following, a first alternative solution of the way the shock absorbers may be disposed in the tilting module and/or system according to the present invention will be described with reference to figure 7, wherein like features already described with reference to previous figures are identified by like reference numerals.

As apparent from figure 7, in the solution depicted therein, the two shock absorbers are disposed above the rigid frame 17. The two shock absorbers are pivotally connected to the suspension system at respective opposite sides through corresponding actuating arms 30 and 31. Moreover, the two shock absorbers are activated by two corresponding tilting cranks adapted to be tilted as a result of a mechanical input transmitted by the actuating means (still disposed inside the rigid frame 17) through corresponding levels (not depicted in figure 7). That means that, during tilting, one shock absorber is displaced along the first predefined direction whilst the second shock absorber is displaced along a second predefined direction contrary to said first predefined direction, In particular, the direction of displacement of the two shock absorbers is parallel to the common axle of the two wheels 2 and 3. Accordingly, as a result of the contrary displacement of the two shock absorbers, an action is exerted by the two arms 30 and 31 on the suspension structure so that the rigid frame 17 is tilted at a predefined angle along with the whole suspension structure, the wheels and the vehicle. The solution depicted in figure 7 is more complicated than that described above with reference to figures 1, 2a and 2b but may be preferred in those situation in which the aerodynamic behavior of the suspension module and/or system has to be improved; in fact, this solution allows to locate the shock absorbers on board the vehicle. The drawback of this solution is the increased complexity due to the increased number of tilting cranks and transmission levers.

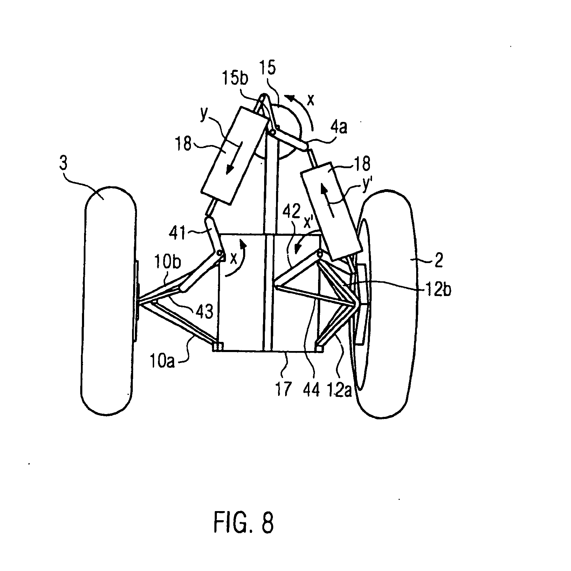

In the following, a further alternative solution of the way the shock absorbers and the actuating device may be reciprocally located and disposed in the tilting module and/or system according to the present invention will be described with reference to figures 8 and 8a, wherein, as usual, like features and/or component parts already described with reference to previous figures are identified by like reference numerals.

The main difference between the solution depicted in figures 8, 8a and that of figures 2, 2a and 2b relates to the fact that in the solution of figures 8 and 8a, the actuating means (in particular, the gearbox 15) are disposed so that the rotatable shaft 15b of the gearbox 15 lies in a vertical plane with respect to the road, i.e. in a plane vertical with respect to figure 8. The two shock absorbers 18 are still provided connected to the gearbox 15 through a first L-shaped arm 4a firmly fixed to the rotatable shaft 15b. That means that as soon as the rotatable shaft 15b is rotated, the L-shaped arm 4a is also rotated so as to push one shock absorber 18 in a first direction whilst the second shock absorber 18 is pulled in a direction substantially contrary to said first direction. The two shock absorbers 18 are furthermore connected to the suspension structure through further L-shaped arms and transmission arms. In particular, the left shock absorber 18 in figure 8 is connected to the suspension structure through a first L-shaped arm 41 and a transmission arm 43; moreover, the L-shaped arm 41 is usually anchored to the rigid frame 17 through a pivotable connection 46a and a connection arm 45. In the same way, the right shock absorber 18 in figure 8 is usually connected to the suspension structure through a second L-shaped arm 42 and a second transmission arm 44; again, the L-shaped arm 42 is pivotally anchored to the rigid frame 17 through a pivotable connection 46b and an anchoring arm 46. In figure 8, the left shock absorber and the left L-shaped arm 41 and the transmission arm 43 are not symmetrically disposed with respect to the right shock absorbers 18, the right L-shaped arm 42 and the right transmission arm 44 in spite of the fact that neither the wheels 2 and 3 nor the suspension system are tilted. However, it has to be appreciated that the non-symmetrical reciprocal disposition of the left and right shock absorbers and the corresponding L-shaped arms and transmission arms only arises during tilting; the purpose of figure 8 is, therefore, only that of clarifying the displacement and/or rotations of the component parts which, as stated before, in normal conditions such as, for instance during traveling on a straight road without tilting, are disposed symmetrically. The right reciprocal disposition of the shock absorbers, the L-shaped arms under normal conditions is, therefore, that depicted in figure 8a. It appears clearly from figure 8 that a rotation of the rotatable shaft in the direction X results in the left shock absorber 18 being pushed or displaced along the direction Y whilst the right shock absorber 18 is pulled in the direction Y'. Accordingly, the left L-shaped arm 14 is also rotated in the X direction whilst the right L-shaped arm 42 is rotated in the contrary direction X'. Moreover, since also in this case, the rigid frame is firmly fixed to the chassis of the vehicle, also the vehicle is tilted at the same angle, thus allowing again the resultant of the gravity and the centrifugal forces to be kept oriented along the vertical body axis of the vehicle, thus allowing to avoid rollover.

As stated above, the suspension tilting module and/or system according to the present invention is conceived so as to allow electric motors to be received inside the hubs of the wheels. Placing electric motors in the inside of the hubs of the wheels as depicted in figures 1, 2a and 2b allows to realize a tilting driving module adapted to be used either in combination with a main drive engine or even in addition to a main engine so as to realize any bridge vehicle. In particular, several forward train architectures are possible comprising for instance a purely electric architecture, wherein the electric power is stored in an appropriate system such as a battery. Alternatively, the brake architecture can be realized, wherein the primary source of energy is an internal engine that can be connected in series or in parallel to the electric motors. Moreover, suitable energy storage allows to manage the power peaks required by the electric motors. The adoption of the tilting module according to the present invention equipped with two electric motors on the two wheels of a common axle and the connection of the second axis (single wheel axis in the case of a three cycle, two wheel axis in the case of a car) to the internal combustion engine permits to transform a vehicle with three or four wheels in a very simple hybrid vehicle of the mixed parallel/series type. The advantages offered by this configuration relate to the fact that it can operate several different modes, namely a parallel hybrid mode and a series hybrid mode. In the parallel mode, the electric motors and the internal combustion engine are used to drive always at the same time. In this case, the electric motors can be used for regenerative braking. Moreover, an electric generator connected to the internal combustion engine can be used to charge the battery or, alternatively, electric motors can be used for this purpose or, alternatively, constant regenerative braking of the corresponding axle is used while the internal combustion engine is driving the other axis. This means that a certain amount of power generated by the internal combustion engine is transmitted through the road and the wheels to the electric motors and, finally, to the battery. In the series hybrid mode, the internal combustion engine generate mechanical power that is transformed into an electric one by a generator. This energy is transferred entirely to the battery as the transmission to the wheels is disengaged. According to a further operation mode (zero emission vehicle), the internal combustion engine is shut down and the electric motors are driven using the energy stored in the battery. The relatively small amount of energy stored in the battery allows short range mobility usually sufficient in the case of city centers. However, in all cases, it is possible to take advantage from the regenerative braking. In a hill truck, the costing braking with electric motors permits a recharge of the batteries without energy dissipation on the brake. Finally, from the point of view of vehicle stability, the introduction of an electric motor on each wheel allows the independent control of the torque on each wheel with the result of obtaining the functionality of an electronic differential with the related advantages of improved performances and safety.

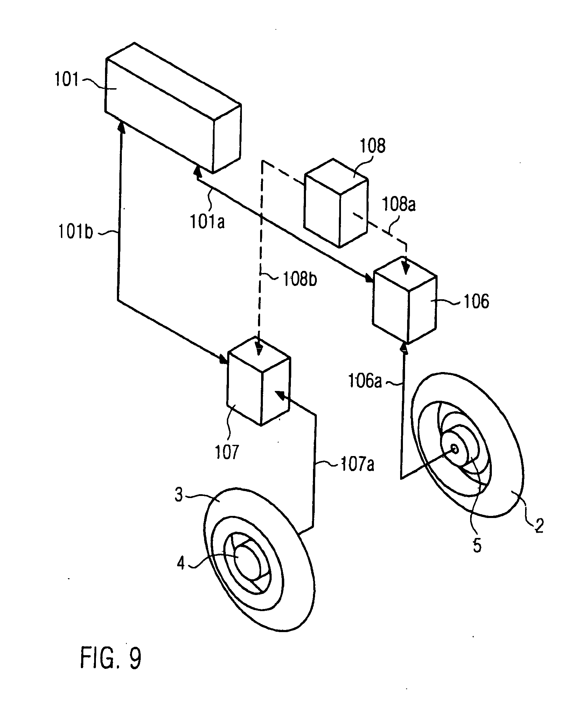

In the following, with reference to figure 9, a first example of a possible electrical layout of a power train adapted to be implemented in the tilting module according to the present invention will be described. In particular, in figure 9, the two wheels of the tilting module are identified by the reference numerals 2 and 3, whilst the electric motors received in the hubs of the wheels are identified by the reference numerals 4 and 5. On the contrary, the whole suspension structure of the tilting module is not depicted in figure 9; it has, however, to be appreciated that the electric layout depicted in figure 9 is adapted to be implemented in any of the tilting modules described above.

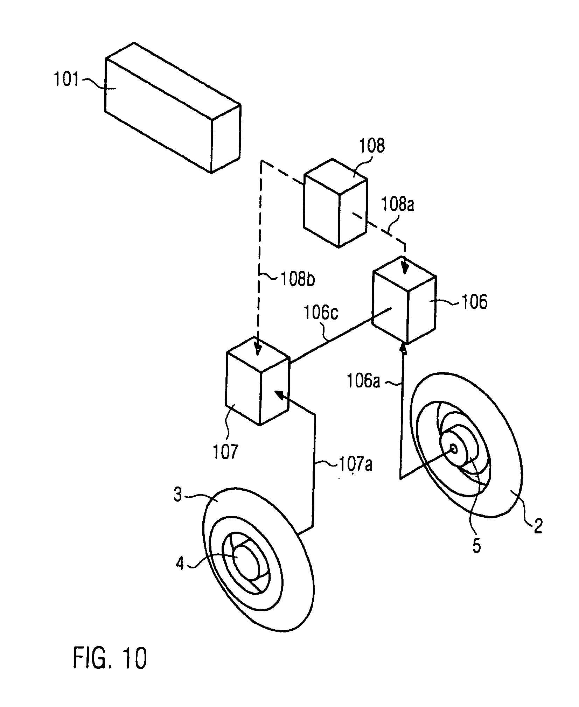

In the layout of figure 9, electrical power stored in the storing means 101 may be supplied to the electric motor 4 to the electrical connection 101b, the power electronic 107 and the final electrical connection 107a. In the same way, electrical power may be supplied from the storing means 101 to the electric motor 5 through the electrical line 101 a, the corresponding power electronic unit 106 and the final electrical connection 106a. This configuration allows the two wheels 2 and 3 to be driven separately and independently from each other; for instance, one of the two wheels 2 or 3, let us say the wheel 3, may be driven by supplying electrical power to the corresponding motor 4, whilst no electrical power is supplied to the electric motor 5 and so that the wheel 2 is not driven. The contrary situation, namely the situation that the electrical power is supplied to the electric motor 5 and not to the electric motor 4, give the result that the wheel 2 is driven whilst the wheel 3 is not driven. Moreover, it is also possible to supply contemporarily the two electric motors 4 and 5 with electrical powers of corresponding different intensity, thus resulting in different mechanical torques being applied to the wheels 3 and 2. The supply of electrical power to one or both of the electric motors 4 and 5 is controlled by the control unit 108 in cooperation with the power electronic unit 107 and 106, respectively. To this end, sensing means (not depicted in figure 9) may also be used, with said sensing means being adapted to collect data relating to the driving conditions and/or the behavior of the vehicle, in particular of the two wheels 2 and 3. The data collected are supplied to the control unit 108 which, in turn as a function of the data collected, controls the function of the power electronic units 107 and 106, thus controlling the supply of the electrical power from the storage means 101 to the two electric motors 4 and 5, respectively. It is also possible to use the two electric motors 4 and 5 as electrical power generating means so as to recharge the storing means 101; for instance, in case of braking of one or both of the two wheels 2 and 3, the energy generated may be supplied from one or both of the electric motors 4 and 5 to the storing means 101 to the power electronic units 107 and 106. The storing means may, therefore, be recharged and the stored energy and/or electric power may be used for the purpose of driving the two electric motors 4 and 5. The layout of figure 9 represents, therefore, an electromechanical module which allows electrical power to be transferred from one of the two electric motors 4 and 5 to the other one of said two motors, thus allowing mechanical torque to be transferred from one of the two wheels 2 and 3 to the other one of said two wheels; in particular, in the case of the layout depicted in figure 9, the electrical power generated by the two electric motors 4 and 5 is first supplied to the storing means 101 where said electrical power is kept at disposal for the purpose of driving said two motors. As soon as the need arises, electrical power is supplied to either one or both of the two motors 4 and 5. It appears, therefore, clearly that the two electric motors 4 and 5 may be driven independently and separately, thus allowing corresponding different mechanical torques to be supplied to the two wheels 2 and 3. Assuming that the layout and/or the electromechanical module of figure 9 is implemented in a vehicle driven by a main engine, for instance a combustion engine acting on the rear wheels, the module of figure 9 may be used for operating the front wheels, thus exploiting the three functions of driving, tilting and steering the wheels; however, the situation is also possible, wherein the front wheels are driven by the main engine whilst the module of figure 9 is used for operating the rear wheels. Moreover, it is also possible to use the module of figure 9 to additionally actuate (i.e. by means of the two electric motors 4 and 5) the wheels driven by the main engine, namely either the front or the rear wheels. Independently thereon which wheels are operated by the main engine and the module of figure 9, the electrical operation of said module may be summarized as follows. In normal driving conditions, the two electric motors 4 and 5 may either remain inoperative or even be used for the purpose of driving the vehicle. When the driving conditions change, for instance when cornering fast, when obstacles are to be avoided or in the case of slippery conditions due to snow, ice, rain or the like, a particular operation of one or both of the two electric motors 4 and 5 may be requested, for instance to two corresponding signals supplied by the control unit 108 to one or more of the power electronic units 107 and 106 as a function of data relating to the driving conditions selected by the sensing means and supplied to the control unit 108. Accordingly, either only one of the two electric motors 4 and 5 may be supplied with electrical power or one of two electric motors may be supplied with additional electrical power resulting in one of the two wheels 2 and 3 being supplied with additional mechanical torque. However, the same electrical torque may also be sent to the two electric motors 4 and 5, resulting in the two wheels 2 and 3 being driven the same way or, alternatively, the two electric motors may even be operated so as to brake a wheel while giving traction to the other, resulting in one of the wheels being driven in a different direction with respect to the other. With the embodiment disclosed above with reference to figure 9, an electrical power may be reciprocally transferred between the two electric motors, thus resulting in corresponding mechanical torque being transferred from one motor to the other; in particular, as verified above in the embodiment of figure 9, this is obtained by preventively storing the electrical power generated by one of both of said two motors in the storing means and by subsequently supplying the stored electrical powers to one of both of said electric motors. However, the need may also arise of transferring electrical power directly from one motor to the other, i.e. without preventively storing said electrical power in the storing means. An example of an electrical layout allowing to directly transfer energy and/or electromechanical power between the two motors, thus allowing to directly transfer mechanical torque between the two corresponding wheels will be disclosed in the following with reference to figure 10, wherein component parts already disclosed with reference to figure 9 are identified by the same reference numerals.

The electrical layout depicted in figure 10 is similar to that disclosed above with reference to figure 9 but different from that of figure 9 in that, in the layout of figure 10, the two power electronic units are directly connected through one or more bypass connecting lines 106c, essentially adapted to allow electrical power or energy to be directly transferred between said two power electronic units 107 and 106. The two power electronic units 107 and 106 are still connected through connecting lines 108b and 108a through a control unit 108 adapted to control the functioning of the two power electronic units 107 and 106, i.e. the energy transfer between said two power electronic units 107 and 106. Accordingly, in a way similar to that of the layout with reference to figure 9, electrical power or energy may be transferred between the two electric motors 4 and 5, these resulting in turn in the possibility to transfer mechanical torque between the two wheels 2 and 3. Again, a sensing means (not depicted in figure 10) may be provided for the purpose of collecting data related to the driving conditions and/or the dynamical behavior of the vehicle and supplied to the control unit 108 from which corresponding signals are supplied to the two power electronic units 107 and 106, so as to control the transfer of electrical power therebetween as a result of the data collected by said sensing means. The most advantage offered by the module of figure 10 with respect to that of figure 9 relates to the fact that energy used for the active differential function, i.e. for activating two electric motors 2 and 3 so as to drive correspondingly the two wheels 2 and 3 is easily managed by the control unit 108 without involving other parts of the electromechanical module and/or of the vehicle such as, for example the storing means or battery pack 101. This allows, in particular, to increase deficiency of the energy exchange in the module. The purpose of said storing means 101 may, therefore, be limited to that of supplying electrical power to the control unit 108 to connecting line not depicted in figure 10. Electrical power is, therefore, collected from one of the two motors (either the motor 4 or the motor 5) and directly transferred to the other motor without temporarily storing said electrical power; accordingly, the electrical power transferred essentially corresponds to the electrical power generated by the motor from which said electrical power is collected, for instance during braking of one of the two wheels. It is also possible to provide dissipating means (not depicted in figure 10) between the two reversible power electronic units 107 and 106 for the purpose of passively dissipating the electrical power generated by the two motors 4 and 5; in fact, the situation may arise in which the electrical power requested for activating one electrical motor is less than the electrical power generated by the other motor. Accordingly, at least part of the electrical power generated by said motor and collected from said motor must be partially dissipated; as stated above, this can be obtained by means of dissipating means provided between the two power electronic units 107 and 106. For instance, said dissipating means may comprise electrical resistance or the like.

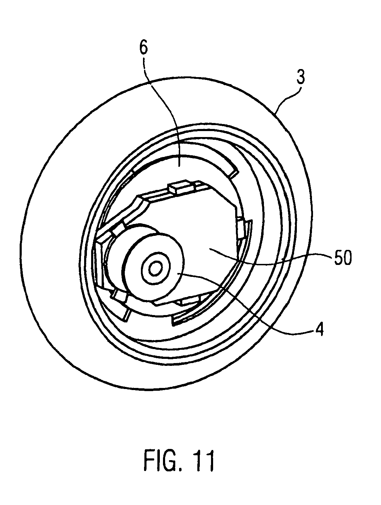

In all the examples described above of the tilting module according to the present invention, the driving motors 4 and 5 received in the hubs of the wheels 2 and 3 are depicted as electric motors directly acting on the axle of the two wheels. However, other solutions are also possible depending on the circumstances. A possible alternative solution is depicted in figure 11 and comprises an electric motor 4 acting on cooperation with a gearbox 15 and received, together with said gearbox, in the hub of the wheel 3. Moreover, in figure 11, reference numeral 6 identifies the brake disk of the wheel. The use of the gearbox 15 according to the solution depicted in figure 11 allows to reduce the torque required to the electric motor 4 and to increase its maximum speed. In this case, the electric motor 4 has a radial dimension lower than the direct drive solutions depicted in the previous figures. It results, therefore, from the disclosure given above that the tilting module and/or system according to the present invention allows to overcome the drawbacks affecting the prior art tilting systems. In particular, the tilting module according to the present invention allows to obtain large tilting and steering angles. Moreover, the provision of electric motors in the two tilting wheels allows the realization of a driving electromechanical tilting module and/or system, without these motors negatively affecting the tilting angles. Accordingly, a high transmission efficiency is obtained, moreover, the module according to the present invention allows the realization of hybrid tilting vehicles and to implement vehicle dynamic control controlling the torque independently on each tilting wheel.

The suspension tilting module shown in figure 2a, 2b in the case of a wheeled vehicle, can be applied to a snow vehicle introducing the necessary changes in order to fix the skis to the tilting module. The functioning of the tilting module for the snow vehicle is the same to the functioning for the wheeled vehicle.

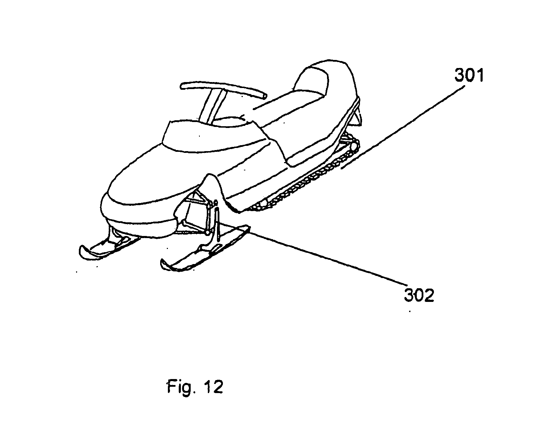

In figure 12 is depicted a snowmobile according to the present invention comprising two skis on the front frame. In a embodiment according to the present invention the snowmobile is driven by a drive track (301). The two skis are connected to a suspension tilting module (302) according to the present invention.

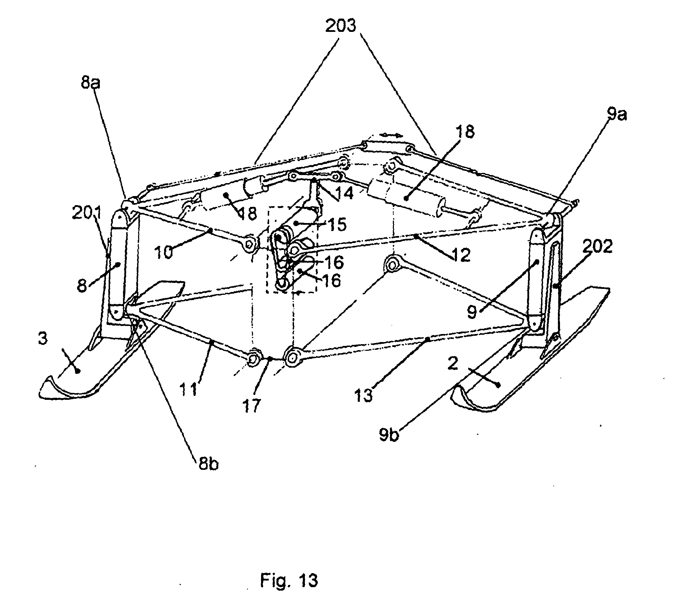

Figure 13 shows the modified suspension titling module so that it can be applied to a snowmobile. The reference numbers have been kept consistent with the number already used in figures 2a, 2b. The main difference is that in the embodiment two skis replace the wheels. The fundamental elements of the suspension system are four arms (10, 11, 12, 13), which can be for example wishbones arms. The arms are linked to a rigid box (17) and to two uprights (8, 9). The two skis (2, 3) are rigidly linked to the uprights (8, 9) through two steering spindles (201, 202), The rigid box (17) is rigidly connected to the frame of the snowmobile. Two shock absorbers (18) are linked on one side to the end of the upper arms (10, 12) and to the tilting crank (14) on the other side. The tilting actuating device is of rotative type and it is realized with an electromechanical servo-system constituted by electric motors (16) and a reduction gear (15) linked to the tilting crank (14). The rotation of the tilting crank (14) relative to the rigid box (17) determines a roll of the vehicle.

The steering command is transferred from the handlebar to the skies by two steering rods (201, 202), connected to the uprights (8, 9) by two joints.

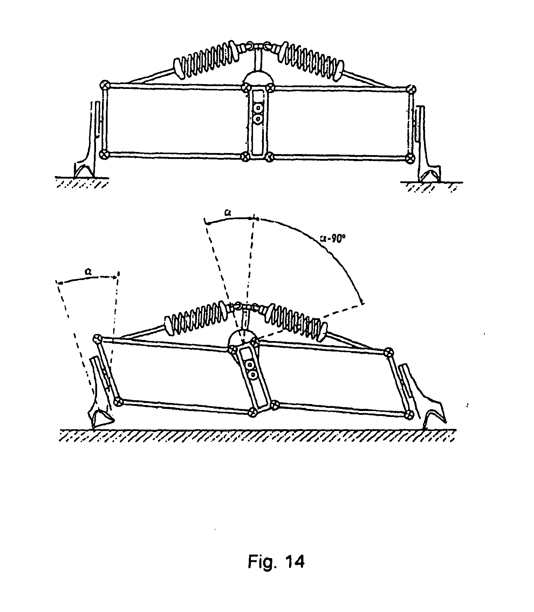

Figure 14 explain the kinematic behavior of the tilting suspension system, which is analogous to the one described previously for the wheeled vehicle. During cornering the electric motors (16) are supplied with an electric current to provide a torque to the tilting crank (14) through the reduction gear (15). Then the tilting crank (14) results tilt to the left. Through the shock absorbers (18) a displacement is given to the suspension structure. However, due to the resistance exerted by the suspension structure, neither the tilting actuating device or tilting crank (14) is tilted to the left nor the suspension structure is displaced into the same direction. However, the resistance exerted by the suspension structure results in a reverse torque arising, with said reverse torque acting on the case of the gearbox (15), resulting in said gearbox (15) being rotated in a direction contrary to the previous one. Since the gearbox (15) is firmly fixed to the rigid frame (17), also this rigid frame (17) is rotated of an angle α as a function of the torque originally given to the tilting crank (14). Considering the connection between the suspension elements, the suspension structure results tilted to the left with the skis (2, 3) of the same angle α. The rigid frame (17) is firmly fixed to the chassis of the vehicle and then the whole vehicle is tilted of the same angle α.

The kinematic characteristic of the module permits to tilt the body of the snowmobile and the skis in a curve, compensating the lateral acceleration on the driver. When the vehicle approaches a curve the driver acts on the steer system to generate lateral forces that starts the vehicle cornering and induces lateral accelerations to the vehicle. The tilting angle can be governed directly by the driver as in the motorcycle or by a control system and a suitable tilting actuator. In the first case (passive tilting) the tilting degree of freedom is controlled by the driver by the steer angle and by its lateral position on the vehicle. In the second case (controlled tilting) a closed loop control system based on the measurement of the lateral acceleration relative to the body acts on the tilting actuating device so as to reduce the lateral acceleration felt by the driver. To this end the actuator is driven so as to rotate in the opposite direction than the body.

The tilting actuator and the relative control system is based on electric central units (ECUs).

If one of the skis crosses a hole, the tilting actuating device does not work because the imposed vertical displacement of the ski (2, 3) is absorbed by the shock absorbers (18). The irreversibility of the gearbox (15) connected to the tilting crank (14) is helpful from the point of view of the tilting control system, as this allow the crank (14) not to move as a consequence of a perturbation to one of the suspensions such as a hole or a bump on the snow.

Particularly important elements of the suspension configuration accroding to the present invention are the spherical joints (8a, 8b, 9a, 9b) between the suspension arms (10, 11, 12, 13) and the uprights (8, 9): these elements are necessary to reach high tilting angles 45 - 50 degrees. To insure the functionality of the suspension the joints have to be able to allow the high rotational angles involved during tilting and steering. Standard spherical joints for automotive applications cannot be used. These joints are in fact designed to allow free rotation about the steer axis and an angle in the range or 40 degrees (overall) in other two directions. Although the steer angle of automotive spherical joints is enough also for a tilting vehicle, the other angles are not adequate for a high tilting suspension where angles in the range of 100 degrees are needed.

The spherical joints applied in the snowmobile are the same joints which have been described previously in detail for a wheeled vehicle.

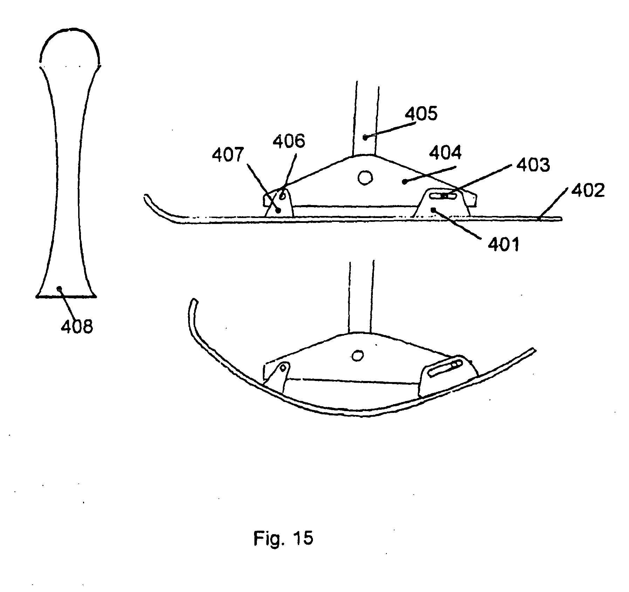

The proposed solution integrates the tilting and steering functions in one device. Four of these joints (8a, 8b, 9a, 9b) need to be installed on a double wishbone suspension to allow the tilting and steering functions. The steering rods (203) are linked to the upper joints (8a, 9a) to command the steering angle of the skis (2, 3) around the steering spindles (201, 202). The other side of the rods is linked to the handlebar to complete the steering command. In figure 15 the connections between the skis and the suspension tilting module are depicted. A further advantage of the present invention is that as the vehicle is able to incline its body, modified skis can be used instead of traditional ones. In a particular embodiment according to the present invention the skis are similar to commercial carving skis. These skis have a variable profile along the length (408). The upright is linked to the ski through a steering spindle constituted by a vertical rods (405) and a horizontal rods (404) which has two terminal spindles (406, 403) to connect the upright to the anchor plates (407, 401) of the ski (402). The spindle (406) is connected fixed to the anchor plates (407) on the ski, while the spindle (403) is inserted in the bore of the plates (401). This bore permits longitudinal displacements of the upright and then the inflection of the ski when the snowmobile approaches a curve. This inflection coupled with the variable profile of the skis (408) improves the dynamic behavior of the vehicle during cornering respect the traditional ski. In fact during cornering, the front part, with carving skis does not slide as with the traditional skis. This improves the vehicle stability in corners at high speed and the drive feeling. The longitudinal displacement of the upright is also an advantage if the ski crosses a hole. In a further embodiment according to the present invention a new driving track at the rear part can be used. A track with a round shape as a motorcycle tire can improve the behavior of the snowmobile during cornering because it guarantees a better contact area when the vehicle is banking to provide a better grip. This round shape track can be used also in combination with the previous described suspension tilting module. In a particular embodiment of the present invention the tilting actuating device employs an electromechanical tilting servoactuator to drive the tilting crank. This permits to realize a by-wire solution for the tilting actuation where the input command is provided by the driver with the handle bar. The driver controls only the steering input and the by wire system controls the stability of the snowmobile working on the tilting actuator starting from the drive input and the signals from the accelerometer. This solution has redundancy characteristic due to the presence of two electric motors, two mechanical transmission, two power electronics and two ECUs.

In a further embodiment according to the present invention the tilting actuating device is a hydraulic actuator. This solution replaces the electromechanical actuator with one constituted by one electric motor, one pump and two hydraulic cylinders. These cylinders are linked to the tilting crank to provide the tilting torque to bank the snowmobile. The advantages of this solution consist in the reduction of the weight of the tilting actuator and in the better optimization of the vehicle layout due to the more compactness of the hydraulic solution than the eletromechanical one. The system remains a by wire solution with an ECU which controls the tilting angle considering the measures of the lateral acceleration and the driver commands.

In a further particular embodiment according to the present invention a free tilting solution for the suspension of the tilting snowmobile is disclosed. In this case no tilting actuator is present to command the tilting. The driver can command the tilting of the snowmobile moving his body such as in a motorcycle. The advantages of this solution consist in the reduction of the overall mass on the snowmobile and in the improved drive feeling of the driver. With this solution the driver can command directly the steer and the tilt of the vehicle without closed loop automatic system. For this reason this solution is adapt for expert driver because there is not automatic system which can prevent lose of control of the snowmobile. For this embodiment, an additional device must be inserted to lock the tilting at low speed or when the vehicle is parking. A brake linked to the tilting crank must be inserted to lock the tilting. This device can be constituted by a brake disc linked to the tilting crank, commanded by a caliper, a hydraulic pump and a lever. The brake disc is rigidly linked to the tilting crank and it has been locked by the caliper. The caliper is actuated by a hydraulic pump with a hydraulic circuit. The driver commands the tilting lock device with the lever inserted on the handlebar of the snowmobile.

When the vehicle moves at low speed or during parking the driver can command this brake by the lever to lock the tilting of the snowmobile. In this case the vehicle is equal to a normal snowmobile, where the suspensions are locked. In the previous embodiments of the electromechanical tilting actuator and of the hydraulic tilting actuator the tilting crank can be locked respectively by the electric motors or by an isolation valve.

Of course, it should be understood that a wide range of changes and modifications can be made to the embodiments described above without departing from the scope of the present invention. It has, therefore, to be understood that the scope fo the present invention is not limited to the embodiments described but is rather defined by the appended claims.

## Claims

1. A suspension tilting module (1) for a vehicle comprising at least two supporting elements (2, 3) disposed between the vehicle and the floor , said module comprising a suspension system adapted to support said at least two supporting elements allowing tilting of said at least two supporting elements, said module comprising an actuating device equipped with tilting means (14) pivotally connected to said suspension system, so that activation of said actuating device results in said tilting means (14) being tilted together with said suspension system and said at least two supporting elements,
said actuating device further comprising a rotatable shaft (15b) firmly fixed to said tilting means (14), so that rotation of said shaft (15b) results in said tilting means being tilted, and at least one electric motor (16) adapted to rotate said rotatable shaft,
said suspension system comprising a rigid frame (17) adapted to be firmly fixed to the chassis of said vehicle, said rigid frame being firmly fixed to said actuating device and pivotally connected to suspension arms (10, 11, 12, 13) of said suspension system so that activation of said actuating device results in said rigid frame being tilted together with said at least supporting elements;
said suspension arms comprising a first upper arm (12) and a first lower arm (13) adapted to pivotally support, in combination, a first supporting element (2) of said at least two supporting elements; as well as a second upper arm (10) and a second lower arm (11) adapted to pivotally support, in combination, a second supporting element (3) of said at least two supporting elements so as to allow tilting of said first and second supporting elements (2, 3);
**characterized in that**
said tilting means (14) are pivotally connected to said first and second upper arms (12) (10) through corresponding first and second shock absorbers (18) respectively.

2. A module as claimed in claim 1,
**characterized in that**
said rotatable shaft lies in a plane substantially horizontal.

3. A module as claimed in one of claims 1 to 2,
**characterized in that**
said suspension system comprises a first upright (9) adapted to support a first supporting element (2) of said at least two supporting elements and a second upright (8) adapted to support a second supporting element (3) of said at least two supporting elements, said first and second uprights (9, 8) allowing steering of said first and second supporting elements on corresponding steering axes substantially vertical and being adapted to be tilted together with said first and second wheels, respectively.

4. A module as claimed in claim 3,
**characterized in that**
said first upright (9) is pivotally connected to first upper and lower arms (12, 13), and **in that** said second upright is pivotally connected to second upper and lower arms (10, 11).

5. A module as claimed in claim 4,
**characterized in that**
said first upright (9) comprises a first upper pivotable connection (9a) pivotably connecting said first upright (9) to said first upper arm (12) and a first lower pivotable connection (9b) pivotably connecting said first upright (9) to said first lower arm (13) and **in that** said second upright (8) comprises a second upper pivotable connection (8a) pivotably connecting said second upright (8) to said second upper arm (10) and a second lower pivotable connection (8b) pivotably connecting said second upright (8) to said second lower arm (10), said first upper and lower pivotable connections (9a, 9b) allowing both tilting and steering of said first upright (9), said second upper and lower pivotable connections (8a, 8b) allowing both tilting and steering of said second upright (8).

6. A module as claimed in claim 5,
**characterized in that**
said first upper pivotable connection (9a) comprises a first upper tilting shaft pivotally supported by corresponding bearing means , **in that** said first lower pivotable connection (9b) comprises a first lower tilting shaft pivotally supported by corresponding bearing means , **in that** said second upper pivotable connection (8a) comprises a second upper tilting shaft (8ab) pivotally supported by corresponding bearing means (8ac, 8ad), and **in that** said first lower pivotable connection (8b) comprises a first lower tilting shaft (8bb) pivotally supported by corresponding bearing means (8bc, 8bd), said first upper and lower tilting shafts allowing tilting of said first upright (9), said second upper and lower tilting shafts (8ab, 8bb) allowing tilting of said second upright (8).

7. A module as claimed in claim 6,
**characterized in that**
said first upper and lower tilting shafts are pivotally connected to said first upper and lower arms (12, 13), respectively, through corresponding first upper and lower pivotable steering connections , and **in that** said second upper and lower tilting shafts (8ab, 8bb) are pivotally connected to said second upper and lower arms (10, 11), respectively, through corresponding second upper and lower pivotable steering connections (8ae, 8be), said first upper and lower pivotable steering connections allowing steering of said first upright (9), said second upper and lower pivotable steering connections (8ae, 8be) allowing steering of said second upright.

8. A module as claimed in claim 7,
**characterized in that**
said first upper and lower pivotable steering connections and said second upper and lower pivotable steering connections (8ae, 8be) comprise steering ball joints.

9. A module as claimed in claim 8,
**characterized in that**
each of said ball joints comprises a substantially spherical portion (8af, 8bf) pivotally received in a corresponding receiving portion (8ae, 8be) of said tilting shafts (8ab, 8bb) and a protruding portion (8ag, 8bg) received in a corresponding receiving portion (10c, 11c)of said arms (12, 13, 10, 11), respectively.

10. A module as claimed in one of claims 1 to 9,
**characterized in that**
said actuating device comprises a reduction gear (15).

11. A module as claimed in one of claims 1 to10,
**characterized in that**
said suspension arms are wishbone arms.

12. A driving tilting suspension system for a wheeled vehicle comprising at least two wheels disposed on a common axle, said system being
**characterized in that**
it comprises a suspension tilting module as claimed in one of claims 1 to 11 and two wheels (2, 3) rotatably connected to said module.

13. A system as claimed in claim 12,
**characterized in that**
said system comprises at least two electric motors (4, 5) each mechanically coupled to one of said at least two wheels (2, 3), so as to drive said one wheel.

14. A system as claimed in claim 13,
**characterized in that**
said system comprises means for alternatively collecting electrical power from one of said two motors and for at least partially supplying the collected electrical power to the other one of said two motors so as to alternatively drive said two motors.

15. A system as claimed in claim 14,
**characterized in that**
the electrical power collected from one of said two motors and supplied to the other one of said two motors, essentially correspond to the electrical power generated by said motor.

16. A system as claimed in one of claims 12 to 14,
**characterized in that**
dissipating means are further provided for at least partially dissipating the electrical power alternatively collected from one of said two motors, so that the electrical power transferred to the other one of said two motors is less than the electrical power collected.

17. A system as claimed in one of claims 12 to 16,
**characterized in that**
said motors are received inside the hubs of said wheels.

18. A system as claimed in claim 17,
**characterized in that**
said motors are mechanically coupled to said wheels through corresponding transmission means (15) adapted to act on corresponding driving axles mechanically connected to said wheels.

19. A system as claimed in claim 18,
**characterized in that**
said transmission means comprises transmission belts.

20. A system as claimed in claim 18,
**characterized in that**
said transmission means comprises transmission gearboxes.

21. A system as claimed in one of claims 14 to 20,
**characterized in that**
said means for alternatively collecting electrical power from one of said two motors and for supplying the collected electrical power to the other one of said two motors comprise at least two power electronic units (106,107), each of said at least power electronic units being electrically connected to one of said two motors.

22. A system as claimed in claim 21,
**characterized in that**
said at least two power electronic units are reciprocally connected to two electrical connections (108a,108b) adapted to allow electrical powder to be transferred between said two power electronic units.

23. A system as claimed in one of claims 21 to 22,
**characterized in that**
it further comprises a control unit (108) electrically connected to each of said power electronic units (106,107) and adapted to control the function of said power electronic units.

24. A system as claimed in claim 23,
**characterized in that**
it further comprises sensing means adapted to collect data relating to the driving characteristics of the vehicle exploiting said system and to supply said data to said control unit.

25. A system as claimed in claim 24,
**characterized in that**
said data comprise data relating to the behavior of said wheels.

26. A wheeled vehicle comprising at least two wheels (2, 3),
**characterized in that**
said vehicle is equipped with a driving tilting suspension system as claimed in one of claims 12 to 25.

27. A vehicle as claimed in claim 26,
**characterized in that**
said vehicle is a four wheeled vehicle comprising two front wheels and two rear wheels, and **in that** said vehicle comprises a rear and a front system as claimed in one of claims 16 to 29, with said rear wheels being rotatably connected to said module of said rear system and the front wheels being rotatably connected to the suspension module of said front system.

28. A vehicle as claimed in claim 26,
**characterized in that**
said vehicle is a four wheeled vehicle comprising two front wheels and two rear wheels, either the front wheels or the rear wheels being driven by a main engine, and **in that** the two wheels not driven by said main engine are rotatably connected to said module of said system.

29. A vehicle as claimed in claim 26,
**characterized in that**
said vesicle is a three wheeled vehicle.

30. A vehicle as claimed in claim 26 when appended to claims 13 to 25,
**characterized in that**
said at least two electric motors of said system also provide the traction torques for driving said two wheels.

31. A driving tilting suspension system for a snowmobile comprising at least two skis disposed on a common axle, said system being
**characterized in that**
it comprises a suspension tilting module as claimed in one of claims 1 to 11 and two skis supported by said module.

32. A system as claimed in claim 31, when appended to one of claims 3 to 9,
**characterized in that**
said skis are rigidly linked to said upright elements (8,9) through two steering spindles (201, 202).

33. A snowmobile
**characterized in that**
said snowmobile is equipped with a driving tilting suspension system as claimed in one of the claims 31 or 32.

34. A snowmobile as claimed in claim 33
**characterized in that**
said skis are shaped skis.

35. A snowmobile as claimed in claim 33
**characterized in that**
said skis are carving skis.

36. A snowmobile as claimed in one of claims 33 to 35, further comprising a drive track
**characterized in that**
drive track has a round shape to improve the stability of the snowmobile.

37. A snowmobile as claimed in one of the claims 33 to 36
**characterized in that** the tilting of the snowmobile is activated by the movement of the driver's body.

38. A snowmobile as claimed in one of the claims 33 to 37
**characterized in that**
the tilting can be locked at low speed or when said snowmobile is parking.

## Patentansprüche

1. Aufhängungs-Neigemodul (1) für ein Fahrzeug, das wenigstens zwei Trageelemente (2, 3) umfasst, die zwischen dem Fahrzeug und dem Boden angeordnet sind, wobei das Modul ein Aufhängungssystem umfasst, das so eingerichtet ist, dass es die wenigstens zwei Trageelemente trägt und Neigen der wenigstens zwei Trageelemente zulässt, wobei das Modul eine Betätigungsvorrichtung umfasst, die mit einer Neigeeinrichtung (14) versehen ist, die schwenkbar mit dem Aufhängungssystem verbunden ist, so dass Aktivierung der Betätigungsvorrichtung bewirkt, dass die Neigeeinrichtung (14) zusammen mit dem Aufhängungssystem und den wenigstens zwei Trageelementen geneigt wird,
die Betätigungsvorrichtung des Weiteren eine drehbare Welle (15b), die fest an der Neigeeinrichtung befestigt ist, so dass Drehung der Welle (15b) bewirkt, dass die Neigeeinrichtung geneigt wird, und wenigstens einen Elektromotor (16) umfasst, der so eingerichtet ist, dass er die drehbare Welle dreht,
das Aufhängungssystem einen starren Rahmen (17) umfasst, der so eingerichtet ist, dass er an dem Chassis des Fahrzeugs befestigt ist, wobei der starre Rahmen an der Betätigungsvorrichtung befestigt und schwenkbar mit Aufhängungsarmen (10, 11, 12, 13) des Aufhängungssystems verbunden ist, so dass Aktivierung der Betätigungsvorrichtung bewirkt, dass der starre Rahmen zusammen mit den wenigstens zwei Trageelementen geneigt wird;
die Aufhängungsarme einen ersten oberen Arm (12) und einen ersten unteren Arm (13) umfassen, die so eingerichtet sind, dass sie in Kombination ein erstes Trageelement (2) der wenigstens zwei Trageelemente schwenkbar tragen, sowie einen zweiten oberen Arm (10) und einen zweiten unteren Arm (11), die so eingerichtet sind, dass sie in Kombination ein zweites Trageelement (3) der wenigstens zwei Trageelemente schwenkbar so tragen, dass das erste und das zweite Trageelement (2, 3) geneigt werden können;
**dadurch gekennzeichnet, dass**
die Neigeeinrichtung (14) über einen entsprechenden ersten und zweiten Stoßdämpfer (18) schwenkbar mit dem ersten bzw. dem zweiten oberen Arm (12) (10) verbunden ist.

2. Modul nach Anspruch 1, **dadurch gekennzeichnet, dass**
die drehbare Welle in einer Ebene im Wesentlichen horizontal liegt.

3. Modul nach einem der Ansprüche 1 bis 2,
**dadurch gekennzeichnet, dass**
das Aufhängungssystem eine erste Stütze (9), die so eingerichtet ist, dass sie ein erstes Trageelement (2) der wenigstens zwei Trageelemente trägt, und eine zweite Stütze (8) umfasst, die so eingerichtet ist, dass sie ein zweites Trageelement (3) der wenigstens zwei Trageelemente trägt, wobei die erste und die zweite Stütze (9, 8) Lenken des ersten und des zweiten Trageelementes an entsprechenden Lenkachsen im Wesentlichen vertikal ermöglichen und sie so eingerichtet sind, dass sie zusammen mit dem ersten bzw. dem zweiten Rad geneigt werden.

4. Modul nach Anspruch 3,
**dadurch gekennzeichnet, dass**
die erste Stütze (9) schwenkbar mit dem ersten oberen und unteren Arm (12, 13) verbunden ist und dass die zweite Stütze schwenkbar mit dem zweiten oberen und unteren Arm (10, 11) verbunden ist.

5. Modul nach Anspruch 4,
**dadurch gekennzeichnet, dass**
die erste Stütze (9) eine erste obere schwenkbare Verbindung (9a), die die erste Stütze (9) schwenkbar mit dem ersten oberen Arm (12) verbindet, sowie eine erste untere schwenkbare Verbindung (9b) umfässt, die die erste Stütze (9) schwenkbar mit dem ersten unteren Arm (13) verbindet, und dass die zweite Stütze (8) eine zweite obere schwenkbare Verbindung (8a), die die zweite Stütze (8) schwenkbar mit dem zweiten oberen Arm (10) verbindet, sowie eine zweite untere schwenkbare Verbindung (8b) umfasst, die die zweite Stütze (8) schwenkbar mit dem zweiten unteren Arm (10) verbindet, wobei die erste obere und untere schwenkbare Verbindung (9a, 9b) sowohl Neigen als auch Lenken der ersten Stütze (9) ermöglichen und die zweite obere und untere schwenkbare Verbindung (8a, 8b) sowohl Neigen als auch Lenken der zweiten Stütze (8) ermöglichen.

6. Modul nach Anspruch 5,
**dadurch gekennzeichnet, dass**
die erste obere schwenkbare Verbindung (9a) eine erste obere Neigewelle umfasst, die durch entsprechende Lagerungseinrichtungen schwenkbar getragen wird, **dadurch**, dass die erste untere schwenkbare Verbindung (9b) eine erste untere Neigewelle umfasst, die von entsprechenden Lagerungseinrichtungen schwenkbar getragen wird, **dadurch**, dass die zweite obere schwenkbare Verbindung (8a) eine zweite obere Neigewelle (8ab) umfasst, die von entsprechenden Lagerungseinrichtungen (8ac, 8ad) schwenkbar getragen wird, und dass die erste untere schwenkbare Verbindung (8b) eine erste untere Neigewelle (8bb) umfasst, die durch entsprechende Lagerungseinrichtungen (8bc, 8bd) schwenkbar getragen wird, wobei die erste obere und untere Neigewelle Neigen der ersten Stütze (9) ermöglichen und die zweite obere und untere Neigewelle (8ab, 8bb) Neigen der zweiten Stütze (8) ermöglichen.

7. Modul nach Anspruch 6,
**dadurch gekennzeichnet, dass**
die erste obere und untere Neigewelle über eine entsprechende erste obere und eine untere schwenkbare Lenkverbindung schwenkbar mit dem ersten oberen bzw. unteren Arm (12, 13) verbunden sind, und dass die zweite obere und untere Neigewelle (8ab, 8bb) über eine entsprechende zweite obere und eine untere schwenkbare Lenkverbindung (8ae, 8be) schwenkbar mit dem zweiten oberen bzw. unteren Arm (10, 11) verbunden sind, wobei die erste obere und untere schwenkbare Lenkverbindung Lenken der ersten Stütze (9) ermöglichen und die zweite obere und untere schwenkbare Lenkverbindung (8ae, 8be) Lenken der zweiten Stütze ermöglichen.

8. Modul nach Anspruch 7,
**dadurch gekennzeichnet, dass**
die erste obere und untere schwenkbare Lenkverbindung sowie die zweite obere und untere schwenkbare Lenkverbindung (8ae, 8be) Lenk-Kugelgelenke umfassen.

9. Modul nach Anspruch 8,
**dadurch gekennzeichnet, dass**
jedes der Kugelgelenke einen im Wesentlichen kugelförmigen Abschnitt (8af, 8bf), der schwenkbar in einem entsprechenden Aufnahmeabschnitt (8ae, 8be) der Neigewellen (8ab, 8bb) aufgenommen ist, sowie einen vorstehenden Abschnitt (8ag, 8bg) umfasst, der jeweils in einem entsprechenden Aufnahmeabschnitt (10c, 11 c) der Arme (12, 13, 10, 11) aufgenommen ist.

10. Modul nach einem der Ansprüche 1 bis 9,
**dadurch gekennzeichnet, dass**
die Betätigungsvorrichtung ein Untersetzungsgetriebe (15) umfasst.

11. Modul nach einem der Ansprüche 1 bis 10,
**dadurch gekennzeichnet, dass**
die Aufhängungsarme Dreiecklenkerarme sind.

12. Antreibendes Neige-Aufhängungssystem für ein Radfahrzeug, das wenigstens zwei Räder umfasst, die auf einer gemeinsamen Achse angeordnet sind, wobei das System
**dadurch gekennzeichnet ist, dass**
es ein Aufhängungs-Neigemodul nach einem der Ansprüche 1 bis 11 sowie zwei Räder (2, 3) umfasst, die drehbar mit dem Modul verbunden sind.

13. System nach Anspruch 12,
**dadurch gekennzeichnet, dass**
das System wenigstens zwei Elektromotoren (4, 5) umfasst, die jeweils mechanisch mit einem der wenigstens zwei Räder (2, 3) gekoppelt sind, um das eine Rad anzutreiben.

14. System nach Anspruch 13,
**dadurch gekennzeichnet, dass**
das System eine Einrichtung zum alternativen Abnehmen von Strom von einem der zwei Motoren und zum wenigstens teilweisen Zuführen des abgenommenen Stroms zu dem anderen der zwei Motoren umfasst, um so alternativ die zwei Motoren anzutreiben.

15. System nach Anspruch 14,
**dadurch gekennzeichnet, dass**
der von dem einen der Motoren abgenommene und dem anderen der zwei Motoren zugeführte Strom im Wesentlichen dem durch den Motor erzeugten Strom entspricht.

16. System nach einem der Ansprüche 12 bis 14,
**dadurch gekennzeichnet, dass**
des Weiteren Ableiteinrichtungen vorhanden sind, um wenigstens teilweise den abwechselnd von einem der zwei Motoren abgenommenen Strom abzuleiten, so dass der zu dem anderen der zwei Motoren übertragene Strom geringer ist als der abgenommene Strom.

17. System nach einem der Ansprüche 12 bis 16,
**dadurch gekennzeichnet, dass**
die Motoren im Inneren der Naben der Räder aufgenommen sind.

18. System nach Anspruch 17,
**dadurch gekennzeichnet, dass**
die Motoren mit den Rädern mechanisch über entsprechende Übertragungseinrichtungen (15) gekoppelt sind, die so eingerichtet sind, dass sie auf entsprechende Antriebsachsen einwirken, die mechanisch mit den Rädern verbunden sind.

19. System nach Anspruch 18,
**dadurch gekennzeichnet, dass**
die Übertragungseinrichtungen Übertragungsriemen umfassen.

20. System nach Anspruch 18,
**dadurch gekennzeichnet, dass**
die Übertragungseinrichtungen Übertragungsgetriebe umfassen.

21. System nach einem der Ansprüche 14 bis 20,
**dadurch gekennzeichnet, dass**
die Einrichtungen zum alternativen Abnehmen von Strom von einem der zwei Motoren und zum Zuführen des abgenommenen Stroms zu dem anderen der zwei Motoren wenigstens zwei Strom-Elektronikeinheiten (106, 107) umfassen, wobei jede der wenigstens zwei Strom-Elektronikeinheiten elektrisch mit einem der zwei Motoren verbunden ist.

22. System nach Anspruch 21,
**dadurch gekennzeichnet, dass**
die wenigstens zwei Strom-Elektronikeinheiten umkehrbar mit zwei elektrischen Verbindungen (108a, 108b) verbunden sind, die so eingerichtet sind, dass sie Übertragung von Strom zwischen den zwei Strom-Elektronikeinheiten ermöglichen.

23. System nach einem der Ansprüche 21 bis 22,
**dadurch gekennzeichnet, dass**
es des Weiteren eine Steuereinheit (108) umfasst, die elektrisch mit jeder der Strom-Elektronikeinheiten (106, 107) verbunden und so eingerichtet ist, dass sie die Funktion der Strom-Elektronikeinheiten steuert.

24. System nach Anspruch 23,
**dadurch gekennzeichnet, dass**
es des Weiteren eine Erfassungseinrichtung umfasst, die so eingerichtet ist, dass sie Daten bezüglich der Fahreigenschaften des Fahrzeugs unter Verwendung des Systems erfasst und die Daten der Steuereinheit zuführt.

25. System nach Anspruch 24,
**dadurch gekennzeichnet, dass**
die Daten Daten umfassen, die sich auf das Verhalten der Räder beziehen.

26. Radfahrzeug, das wenigstens zwei Räder (2, 3) umfasst,
**dadurch gekennzeichnet, dass**
das Fahrzeug mit einem antreibenden Neige-Aufhängungssystem nach einem der Ansprüche 12 bis 25 ausgestattet ist.

27. Fahrzeug nach Anspruch 26,
**dadurch gekennzeichnet, dass**
das Fahrzeug ein vierrädriges Fahrzeug ist, das zwei Vorderräder und zwei Hinterräder umfasst, und dass das Fahrzeug ein hinteres und ein vorderes System nach einem der Ansprüche 16 bis 29 umfasst, wobei die Hinterräder drehbar mit dem Modul des hinteren Systems verbunden sind und die Vorderräder drehbar mit dem Aufhängungsmodul des vorderen Systems verbunden sind.

28. Fahrzeug nach Anspruch 26,
**dadurch gekennzeichnet, dass**
das Fahrzeug ein vierrädriges Fahrzeug ist, das zwei Vorderräder und zwei Hinterräder umfasst, wobei entweder die Vorderräder oder die Hinterräder von einem Hauptmotor angetrieben werden, und **dadurch**, dass die zwei Räder, die nicht von dem Hauptmotor angetrieben werden, drehbar mit dem Modul des Systems verbunden sind.

29. Fahrzeug nach Anspruch 26,
**dadurch gekennzeichnet, dass**
das Fahrzeug ein dreirädriges Fahrzeug ist.

30. Fahrzeug nach Anspruch 26, wenn angefügt an Ansprüche 13 bis 25,
**dadurch gekennzeichnet, dass**
die wenigstens zwei Elektromotoren des Systems auch die Traktionsmomente zum Antreiben der zwei Räder erzeugen.

31. Antreibendes Neige-Aufhängungssystem für ein Schneemobil, das wenigstens zwei Ski umfasst, die auf einer gemeinsamen Achse angeordnet sind, wobei das System
**dadurch gekennzeichnet ist, dass**
es ein Aufhängungs-Neigemodul nach einem der Ansprüche 1 bis 11 sowie zwei von dem Modul getragene Ski umfasst.

32. System nach Anspruch 31, wenn an einen der Ansprüche 3 bis 9 angehängt,
**dadurch gekennzeichnet, dass**
die Ski über zwei Lenkspindeln (201, 202) starr mit den Stützelementen (8, 9) verbunden sind.

33. Schneemobil,
**dadurch gekennzeichnet, dass**
das Schneemobil mit einem antreibenden Neige-Aufhängungssystem nach einem der Ansprüche 31 oder 32 versehen ist.

34. Schneemobil nach Anspruch 33,
**dadurch gekennzeichnet, dass**
die Ski geformte Ski sind.

35. Schneemobil nach Anspruch 33,
**dadurch gekennzeichnet, dass**
die Ski Carving-Ski sind.

36. Schneemobil nach einem der Ansprüche 33 bis 35, das des Weiteren eine Antriebskette umfasst,
**dadurch gekennzeichnet, dass**
die Antriebskette eine runde Form hat, um die Stabilität des Schneemobils zu verbessern.

37. Schneemobil nach einem der Ansprüche 33 bis 36,
**dadurch gekennzeichnet, dass**
das Neigen des Schneemobüs durch die Bewegung des Körpers des Fahrers augelöst wird.

38. Schneemobil nach einem der Ansprüche 33 bis 37,
**dadurch gekennzeichnet, dass**
das Neigen bei niedriger Geschwindigkeit oder wenn das Schneemobil parkt, arretiert werden kann.

## Revendications

1. Module d'inclinaison de suspension (1) pour un véhicule comprenant au moins deux éléments de support (2, 3) disposés entre le véhicule et le sol, ledit module comprenant un système de suspension conçu pour supporter lesdits éléments de support permettant l'inclinaison desdits éléments de support, ledit module comprenant un dispositif d'actionnement équipé d'un moyen d'inclinaison (14) relié de façon pivotante audit système de suspension, de sorte que l'activation dudit dispositif d'actionnement aboutit à l'inclinaison dudit moyen d'inclinaison (14) en même temps que ledit système de suspension et lesdits éléments de support,
ledit dispositif d'actionnement comprenant en outre un arbre rotatif (15b) fermement fixé audit moyen d'inclinaison (14), de sorte que la rotation dudit arbre (15b) aboutit à l'inclinaison dudit moyen d'inclinaison, et au moins un moteur électrique (16) conçu pour faire tourner ledit arbre rotatif,
ledit système de suspension comprenant un cadre rigide (17) conçu pour être fermement fixé au châssis dudit véhicule, ledit cadre rigide étant fermement fixé audit dispositif d'actionnement et relié de façon pivotante aux bras de suspension (10, 11, 12, 13) dudit système de suspension, de sorte que l'activation dudit dispositif d'actionnement aboutit à l'inclinaison dudit cadre rigide en même temps que lesdits éléments de support ;
lesdits bras de suspension comprenant un premier bras supérieur (12) et un premier bras inférieur (13) conçus pour supporter de façon pivotante, en combinaison, un premier élément de support (2) desdits éléments de support, aussi bien qu'un second bras supérieur (10) et qu'un second bras inférieur (11) conçus pour supporter de façon pivotante, en combinaison, un second élément de support (3) desdits éléments de support de façon à permettre l'inclinaison desdits premier et second éléments de support (2, 3) ;
**caractérisé en ce que**
ledit moyen d'inclinaison (14) est relié de façon pivotante auxdits premier et second bras supérieurs (12) (10) par l'intermédiaire de premier et second amortisseurs correspondants respectifs (18).

2. Module selon la revendication 1,
**caractérisé en ce que**
ledit arbre rotatif se situe dans un plan sensiblement horizontal.

3. Module selon l'une des revendications 1 à 2,
**caractérisé en ce que**
ledit système de suspension comprend un premier montant (9) conçu pour supporter un premier élément de support (2) desdits éléments de support et un second montant (8) conçu pour supporter un second élément de support (3) desdits éléments de support, lesdits premier et second montants (9, 8) permettant de diriger lesdits premier et second éléments de support sur des axes de direction correspondants sensiblement verticaux et conçus pour être respectivement inclinés en même temps que lesdites première et seconde roues.

4. Module selon la revendication 3,
**caractérisé en ce que**
ledit premier montant (9) est relié de façon pivotante aux premiers bras supérieur et inférieur (12, 13), et **en ce que** ledit second montant est relié de façon pivotante aux seconds bras supérieur et inférieur (10, 11).

5. Module selon la revendication 4,
**caractérisé en ce que**
ledit premier montant (9) comprend une première connexion pivotante supérieure (9a) reliant de manière pivotante ledit premier montant (9) audit premier bras supérieur (12) et une première connexion pivotante inférieure (9b) reliant de manière pivotante ledit premier montant (9) audit premier bras inférieur (13), et **en ce que** ledit second montant (8) comprend une seconde connexion pivotante supérieure (8a) reliant de manière pivotante ledit second montant (8) audit second bras supérieur (10) et une seconde connexion pivotante inférieure (8b) reliant de manière pivotante ledit second montant (8) audit second bras inférieur (10), lesdites premières connexions pivotantes supérieure et inférieure (9a, 9b) permettant tant l'inclinaison que l'orientation dudit premier montant (9), lesdites secondes connexions pivotantes supérieure et inférieure (8a, 8b) permettant tant l'inclinaison que l'orientation dudit second montant (8).

6. Module selon la revendication 5,
**caractérisé en ce que**
ladite première connexion pivotante supérieure (9a) comprend un premier arbre d'inclinaison supérieur supporté de façon pivotante par des moyens formant paliers correspondants, **en ce que** ladite première connexion pivotante inférieure (9b) comprend un premier arbre d'inclinaison inférieur supporté de façon pivotante par des moyens formant paliers correspondants, **en ce que** ladite seconde connexion pivotante supérieure (8a) comprend un second arbre d'inclinaison supérieur (8ab) supporté de façon pivotante par des moyens formant paliers correspondants (8ac, 8ad), et **en ce que** ladite première connexion pivotante inférieure (8b) comprend un premier arbre d'inclinaison inférieur (8bb) supporté de façon pivotante par des moyens formant paliers correspondants (8bc, 8bd), lesdits premiers arbres d'inclinaison supérieur et inférieur permettant l'inclinaison dudit premier montant (9), lesdits seconds arbres d'inclinaison supérieur et inférieur (8ab, 8bb) permettant l'inclinaison dudit second montant (8).

7. Module selon la revendication 6,
**caractérisé en ce que**
lesdits premiers arbres d'inclinaison supérieur et inférieur sont respectivement reliés de façon pivotante auxdits premier bras supérieur et inférieur (12, 13) par l'intermédiaire de premières connexions de direction pivotantes supérieure et inférieure correspondantes, et **en ce que** lesdits seconds arbres d'inclinaison supérieur et inférieur (8ab, 8bb) sont respectivement reliés de façon pivotante auxdits seconds bras supérieur et inférieur (10, 11) par l'intermédiaire de secondes connexions de direction pivotantes supérieure et inférieure correspondantes (8ae, 8be), lesdites premières connexions de direction pivotantes supérieure et inférieure permettant l'orientation dudit premier montant (9), lesdites secondes connexions de direction pivotantes supérieure et inférieure (8ae, 8be) permettant l'orientation dudit second montant.

8. Module selon la revendication 7,
**caractérisé en ce que**
lesdites premières connexions de direction pivotantes supérieure et inférieure et lesdites secondes connexions de direction pivotantes supérieure et inférieure (8ae, 8be) sont constituées par des joints à rotule de direction.

9. Module selon la revendication 8,
**caractérisé en ce que**
chacun desdits joint à rotule comprend une partie sensiblement sphérique (8af, 8bf) reçue de façon pivotante dans une partie de réception correspondante (8ae, 8be) desdits arbres d'inclinaison (8ab, 8bb) et une partie saillante (8ag, 8bg) respectivement reçue dans une partie de réception correspondante (10c, 11c) desdits bras (12, 13, 10, 11).

10. Module selon l'une des revendications 1 à 9,
**caractérisé en ce que**
ledit dispositif d'actionnement comprend un engrenage de réduction (15).

11. Module selon l'une des revendications 1 à 10,
**caractérisé en ce que**
lesdits bras de suspension sont des bras de triangle de suspension avant.

12. Système de suspension à inclinaison en conduisant pour un véhicule à roues comprenant au moins deux roues disposées sur un axe commun, ledit système étant
**caractérisé en ce que**
il comprend un module d'inclinaison de suspension selon l'une des revendications 1 à 11 et deux roues (2, 3) reliées en rotation audit module.

13. Système selon la revendication 12,
**caractérisé en ce que**
ledit système comprend au moins deux moteurs électriques (4, 5) chacun étant mécaniquement accouplé à l'une desdites deux roues (2, 3), de façon à entraîner ladite roue particulière.

14. Système selon la revendication 13,
**caractérisé en ce que**
ledit système comprend un moyen pour recueillir en alternance la puissance électrique provenant d'un desdits deux moteurs et pour au moins fournir partiellement la puissance électrique recueillie à l'autre moteur de façon à piloter en alternance lesdits moteurs.

15. Système selon la revendication 14,
**caractérisé en ce que**
la puissance électrique, recueillie en provenance d'un desdits moteurs et fournie à l'autre desdits moteur, correspond sensiblement à la puissance électrique produite par ledit moteur.

16. Système selon l'une des revendications 12 à 14,
**caractérisé en ce que**
des moyens de dissipation sont en outre prévus pour dissiper au moins partiellement la puissance électrique recueillie en alternance en provenance d'un desdits moteurs, de sorte que la puissance électrique transférée à l'autre moteur est inférieure à la puissance électrique recueillie.

17. Système selon l'une des revendications 12 à 16,
**caractérisé en ce que**
lesdits moteurs sont reçus à l'intérieur des moyeux desdites roues.

18. Système selon la revendication 17,
**caractérisé en ce que**
lesdits moteurs sont mécaniquement accouplés auxdites roues par l'intermédiaire de moyens de transmission correspondants (15) conçus pour agir sur des axes d'entraînement correspondants mécaniquement reliés auxdites roues.

19. Système selon la revendication 18,
**caractérisé en ce que**
lesdits moyens de transmission sont constitués par des courroies de transmission.

20. Système selon la revendication 18,
**caractérisé en ce que**
lesdits moyens de transmission sont constitués par des boîtes de vitesses de transmission.

21. Système selon l'une des revendications 14 à 20,
**caractérisé en ce que**
lesdits moyens pour recueillir en alternance la puissance électrique en provenance d'un desdits moteurs et pour fournir la puissance électrique recueillie à l'autre moteur comprennent au moins deux unités électroniques de puissance (106,107), chacune desdites unités électroniques de puissance étant électriquement reliée à un desdits moteurs.

22. Système selon la revendication 21,
**caractérisé en ce que**
lesdites unités électroniques de puissance sont réciproquement reliées à deux connexions électriques (108a, 108b) conçues pour permettre à la puissance électrique d'être transférée entre lesdites unités électroniques de puissance.

23. Système selon l'une des revendications 21 à 22,
**caractérisé en ce que**
il comprend en outre une unité de commande (108) électriquement reliée à chacune desdites unités électroniques de puissance (106,107) et conçue pour commander le fonctionnement desdites unités électroniques de puissance.

24. Système selon la revendication 23,
**caractérisé en ce que**
il comprend en outre un moyen de détection conçu pour recueillir des données se rapportant aux caractéristiques de conduite du véhicule exploitant ledit système et pour fournir lesdites données à ladite unité de commande.

25. Système selon la revendication 24,
**caractérisé en ce que**
lesdites données comprennent des données se rapportant au comportement desdites roues.

26. Véhicule à roues comprenant au moins deux roues (2, 3),
**caractérisé en ce que**
ledit véhicule est équipé d'un système de suspension à inclinaison en conduisant selon l'une des revendications 12 à 25.

27. Véhicule selon la revendication 26,
**caractérisé en ce que**
ledit véhicule est un véhicule à quatre roues comprenant deux roues avant et deux roues arrière, et **en ce que** ledit véhicule comprend un système arrière et un système avant selon l'une des revendications 16 à 29, lesdites roues arrière étant reliées en rotation audit module dudit système arrière et les roues avant étant reliées en rotation au module de suspension dudit système avant.

28. Véhicule selon la revendication 26,
**caractérisé en ce que**
ledit véhicule est un véhicule à quatre roues comprenant deux roues avant et deux roues arrière, soit les roues avant soit les roues arrière étant entraînées par un moteur principal, et **en ce que** les deux roues non entraînées par ledit moteur principal sont reliées en rotation audit module dudit système.

29. Véhicule selon la revendication 26,
**caractérisé en ce que**
ledit véhicule est un véhicule à trois roues.

30. Véhicule selon la revendication 26 quand elle est dépendante de l'une quelconque des revendications 13 à 25,
**caractérisé en ce que**
lesdits moteurs électriques dudit système fournissent également les couples de traction pour entraîner lesdites roues.

31. Système de suspension à inclinaison en conduisant pour une motoneige comprenant au moins deux skis disposés sur un axe commun, ledit système étant
**caractérisé en ce que**
il comprend un module d'inclinaison de suspension selon l'une des revendications 1 à 11 et deux skis supportés par ledit module.

32. Système selon la revendication 31, quand elle est dépendante de l'une des revendications 3 à 9,
**caractérisé en ce que**
lesdits skis sont liés de manière rigide auxdits éléments verticaux (8, 9) par l'intermédiaire de deux fusées de direction (201, 202).

33. Motoneige
**caractérisée en ce que**
ladite motoneige est équipée d'un système de suspension à inclinaison en conduisant selon l'une des revendications 31 ou 32.

34. Motoneige selon la revendication 33
**caractérisée en ce que**
lesdits skis sont des skis profilés.

35. Motoneige selon la revendication 33
**caractérisée en ce que**
lesdits skis sont des skis paraboliques.

36. Motoneige selon l'une des revendications 33 à 35, comprenant en outre une chenille d'entraînement
**caractérisée en ce que**
la chenille d'entraînement a une forme arrondie pour améliorer la stabilité de la motoneige.

37. Motoneige selon l'une des revendications 33 à 38
**caractérisée en ce que**
l'inclinaison de la motoneige est activée par le mouvement du corps du conducteur.

38. Motoneige selon l'une des revendications 33 à 37
**caractérisée en ce que**
l'inclinaison peut être verrouillée à faible vitesse ou lorsque ladite motoneige est au stationnement.
